# EUROPEAN PATENT APPLICATION

(11) **EP 4 776 666 A1**
(43) Date of publication of application: **15.07.2026**
(21) Application number: 24870343.1
(22) Date of filing: 02.09.2024
(51) Int. Cl.: H04W 12/04, H04W 60/00, H04W 12/041, H04W 12/0433, H04W 12/08, H04W 12/06

(54) **COMMUNICATION METHOD AND APPARATUS**

(30) Priority: 26.09.2023 CN 202311268332
(71) Applicant: HUAWEI TECHNOLOGIES CO., LTD., Shenzhen 518129 (CN)
(72) Inventor: GUO, Yanfei, Shenzhen, Guangdong 518129 (CN); WU, Yizhuang, Shenzhen, Guangdong 518129 (CN); LI, He, Shenzhen, Guangdong 518129 (CN)
(74) Representative: Thun, Clemens
(86) International application number: PCT/CN2024/116299
(87) International publication number: WO 2025/066797

(57) **Abstract**

A communication method and apparatus are provided, to avoid an unnecessary authentication procedure in a dual 3GPP access type scenario. The method includes: A terminal device sends a registration request to a second AMF, where the registration request includes indication information, and the indication information indicates dual 3GPP access. The second AMF sends a first message to a first AMF, where the first message includes the registration request. A first NAS connection that is based on a 3GPP access type exists between the terminal device and the first AMF. The first AMF generates, based on a first AMF key corresponding to the first NAS connection, a second AMF key corresponding to a second NAS connection. The second NAS connection is a connection that is between the terminal device and the second AMF and that is based on the 3GPP access type. The first AMF sends a second message to the second AMF, where the second message includes the second AMF key.

## Description

### CROSS-REFERENCE TO RELATED APPLICATIONS

This application claims priority to Chinese Patent Application No. 202311268332.3, filed with the China National Intellectual Property Administration on September 26, 2023 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

In the 3rd generation partnership project (the 3rd generation partnership project, 3GPP), a terminal device can separately access two different public land mobile networks (public land mobile networks, PLMNs) based on one 3GPP access type and one non-3GPP access type, and maintain two different security contexts for serving networks of the two PLMNs. Specifically, the security context corresponding to the 3GPP access type is established after the terminal device performs primary authentication in a home public land mobile network (home public land mobile network, HPLMN) based on an identity credential 1 of the 3GPP access type, and the security context corresponding to the non-3GPP access type is established after the terminal device performs primary authentication in the HPLMN based on an identity credential 2 of the non-3GPP access type. In other words, in a multi-registration scenario including the 3GPP access type and the non-3GPP access type, the terminal device needs to perform primary authentication in the HPLMN twice based on the two different identity credentials.

Currently, a dual 3GPP access scenario is further introduced into the 3GPP. To be specific, the terminal device may separately access two PLMNs based on the 3GPP access type. How to ensure security of the dual 3GPP access scenario is a technical problem that needs to be urgently resolved currently.

### SUMMARY

This application provides a communication method and apparatus, to avoid an unnecessary authentication procedure in a dual 3GPP access type scenario.

According to a first aspect, this application provides a communication method. The communication method may be performed by a first mobility management network element. The first mobility management network element may be a network element in a hardware device, may run a software function on dedicated hardware, or may be a virtualized function instantiated on a platform (for example, a cloud platform). Optionally, the first mobility management network element may be implemented by one device, may be jointly implemented by a plurality of devices, or may be a functional module in one device.

The communication method includes the following.

The first mobility management network element receives a first message from a second mobility management network element, where the first message includes a registration request from a terminal device, the registration request includes indication information, the indication information indicates dual 3GPP access, and a first non-access stratum connection that is based on a 3GPP access type exists between the terminal device and the first mobility management network element. The first mobility management network element generates a second mobility management network element key based on a first mobility management network element key. The first mobility management network element sends a second message to the second mobility management network element, where the second message includes the second mobility management network element key. The first mobility management network element key is used to derive a first security protection key, the first security protection key is used to perform security protection on a message transmitted on the first non-access stratum connection, the second mobility management network element key is used to derive a second security protection key, the second security protection key is used to perform security protection on a message transmitted on a second non-access stratum connection, and the second non-access stratum connection is a connection that is between the terminal device and the second mobility management network element and that is based on the 3GPP access type. The second message may be a response message of the first message.

In the foregoing technical solution, when determining that the registration request indicates the dual 3GPP access, that is, when determining that the terminal device requests to establish the second non-access stratum connection to the second mobility management network element based on the 3GPP access type, the first mobility management network element generates the second mobility management network element based on the first mobility management network element key, and sends the second mobility management network element key to the second mobility management network element, to implement security protection on the message transmitted on the second non-access stratum connection, thereby improving security in a dual 3GPP scenario. In other words, after receiving the second mobility management network element key, the second mobility management network element generates the second security protection key based on the second mobility management network element key, and performs, based on the second security protection key, security protection on the message transmitted on the second non-access stratum connection, to improve security.

In addition, if the registration request indicates the dual 3GPP access, after receiving the registration request from the terminal device, the second mobility management network element may send the registration request to the first mobility management network element to obtain the second mobility management network element key, and the second mobility management network element may no longer indicate the terminal device to perform primary authentication in an HPLMN for the second time based on an identity credential of the 3GPP access type. In this way, the terminal device only needs to perform primary authentication in the HPLMN based on the identity credential of the 3GPP access type when accessing the PLMN based on the 3GPP access type for the first time. When accessing the second PLMN based on the 3GPP access type for the second time, the terminal device does not need to perform primary authentication in the HPLMN based on the identity credential of the 3GPP access type, and does not need to generate the second mobility management network element key after the primary authentication. This helps avoid an unnecessary procedure and improve network performance.

In a possible implementation, the first message further includes message authentication code. Before the first mobility management network element sends the second message to the second mobility management network element, that is, after receiving the first message, the first mobility management network element may further successfully verify the registration request in the first message based on the first security protection key and the message authentication code in the first message.

In the foregoing technical solution, the first mobility management network element verifies the registration request in the first message based on the first security protection key. After the verification succeeds, the first mobility management network element may consider that the terminal device is a terminal device with a valid identity. In this way, the terminal device does not need to perform primary authentication in the HPLMN for the second time based on the identity credential of the 3GPP access type. This helps avoid an unnecessary procedure and improve network performance.

In a possible implementation, after generating the second mobility management network element key based on the first mobility management network element key, the first mobility management network element still retains (that is, does not delete) a first security context of the first non-access stratum connection. The first security context includes the first mobility management network element key and the first security protection key.

In the foregoing technical solution, the first mobility management network element determines, based on the indication information, that the network supports coexistence of the first non-access stratum connection and the second non-access stratum connection. Therefore, after generating the second mobility management network element key, the first mobility management network element still retains the first security context, and the first mobility management network element may continue to perform, based on the first security context, security protection on the message transmitted on the first non-access stratum connection.

In a possible implementation, the first mobility management network element further generates a second key set identifier based on a first key set identifier, where the first key set identifier identifies the first security context of the first non-access stratum connection, the second key set identifier identifies a second security context of the second non-access stratum connection, and the second security context includes the second mobility management network element key and the second security protection key. Then, the first mobility management network element may further send the second key set identifier to the second mobility management network element through the second message.

In the foregoing technical solution, the first mobility management network element generates the second key set identifier based on the first key set identifier, and sends the second key set identifier to the second mobility management network element. In this way, the second mobility management network element can perform, based on the second security context associated with the second key set identifier, security protection on the message transmitted on the second non-access stratum connection, thereby improving security in the dual 3GPP scenario. Further, when the terminal device does not need to index the first security context based on the first key set identifier from the second mobility management network element (for example, the terminal device maintains only one security context (namely, the first security context)), the first mobility management network element does not need to send the first key set identifier to the second mobility management network element. This helps reduce a length of a transmitted message.

In a possible implementation, the second message further includes the first key set identifier. In other words, the first mobility management network element may further send the first key set identifier to the second mobility management network element through the second message. The first key set identifier may be used by the second mobility management network element to generate the second key set identifier based on the first key set identifier, to associate the second key set identifier with the second security context.

In the foregoing technical solution, the second mobility management network element generates the second key set identifier, so that the first mobility management network element can be prevented from obtaining other security information about the second non-access stratum connection than the second mobility management network element key, and the first mobility management network element can be prevented from obtaining the second security context of the second non-access stratum connection. This helps implement security isolation.

In a possible implementation, a value of a type field included in the second key set identifier is the same as a value of a type field included in the first key set identifier. A value of a value field included in the second key set identifier is different from a value of a value field included in the first key set identifier.

In a possible implementation, the first message is a context transmission request (for example, a Namf_Communication_UEContextTransfer message), and the second message is a context transmission response (for example, a Namf_Communication_UEContextTransfer response message); or the first message is an N1 message notification (for example, a Namf_Communication_N1MessageNotify message), and the second message is a context creation response (for example, a Namf_Communication_CreateUEContext message); or the first message is a dual 3GPP access security context transmission request (for example, a Namf_Dual3GPPaccessSecurityContextTransfer message), and the second message is a dual 3GPP access security context transmission response (for example, a Namf_Dual3GPPaccessSecurityContextTransfer response message).

In a possible implementation, that the first mobility management network element generates the second mobility management network element key based on the first mobility management network element key may be specifically: The first mobility management network element generates the second mobility management network element key based on the first mobility management network element key and the first information. The first information includes one or more of the following: an identifier of a key generation function; a count value of the message transmitted on the first non-access stratum connection; a direction of the message transmitted on the first non-access stratum connection; an identifier of the 3GPP access type; an identifier of a public land mobile network to which the first mobility management network element belongs; and an identifier of a public land mobile network to which the second mobility management network element belongs. In an example, the direction of the message transmitted on the first non-access stratum connection is downlink, and the count value of the message transmitted on the first non-access stratum connection is equal to a quantity of times that the first mobility management network element sends, on the first non-access stratum connection based on the first security protection key, a downlink message to the terminal device. In still another example, the direction of the message transmitted on the first non-access stratum connection is uplink, and the count value of the message transmitted on the first non-access stratum connection is equal to a quantity of times that the first mobility management network element receives, on the first non-access stratum connection based on the first security protection key, an uplink message from the terminal device.

In the foregoing technical solution, specific input parameters used when the first mobility management network element generates the second mobility management network element key based on the first mobility management network element key are provided. These specific input parameters are same input parameters maintained by the first mobility management network element and the terminal device. In this way, the first mobility management network element and the terminal device may separately generate a same second mobility management network element key based on these input parameters.

According to a second aspect, this application provides a communication method. The communication method may be performed by a terminal device or a module (for example, a chip) in the terminal device. For ease of description, the following uses an example in which the method is performed by the terminal device for description.

The communication method includes: The terminal device sends a registration request to a second mobility management network element, where the registration request includes indication information, the indication information indicates dual 3GPP access, and a first non-access stratum connection that is based on a 3GPP access type exists between the terminal device and a first mobility management network element. The terminal device generates a second mobility management network element key based on a first mobility management network element key. The first mobility management network element key is used to derive a first security protection key, and the first security protection key is used to perform security protection on a message transmitted on the first non-access stratum connection. The second mobility management network element key is used to derive a second security protection key, the second security protection key is used to perform security protection on a message transmitted on a second non-access stratum connection, and the second non-access stratum connection is a connection that is between the terminal device and the second mobility management network element and that is based on the 3GPP access type. Optionally, the terminal device further receives a registration response from the second mobility management network element, where the registration response is a response corresponding to the registration request, and the registration response is, for example, a registration accept (registration accept) message.

In the foregoing technical solution, when the terminal device requests to establish the second non-access stratum connection to the second mobility management network element based on the 3GPP access type, the terminal device sends the registration request to the second mobility management network element, where the registration request indicates the dual 3GPP access. Correspondingly, the second mobility management network element requests the second mobility management network element key from the first mobility management network element. The terminal device further generates the second mobility management network element key based on the first mobility management network element key. In this way, security protection is implemented on the message transmitted on the second non-access stratum connection, thereby improving security in a dual 3GPP scenario. In other words, the terminal device generates the second security protection key based on the second mobility management network element key, and performs, based on the second security protection key, security protection on the message transmitted on the second non-access stratum connection, to improve security.

In addition, the registration request indicates the dual 3GPP access, and the second mobility management network element may send the registration request to the first mobility management network element, to obtain the second mobility management network element key from the first mobility management network element. The terminal device generates the second mobility management network element key based on the first mobility management network element key. In this way, the terminal device only needs to perform primary authentication in an HPLMN based on an identity credential of the 3GPP access type when accessing a PLMN based on the 3GPP access type for the first time. This helps avoid an unnecessary procedure and improve network performance.

In a possible implementation, that the terminal device sends the registration request to the second mobility management network element may be specifically: The terminal device generates, based on the first security protection key and the registration request, a message authentication code used to verify the registration request. The terminal device sends the registration request and the message authentication code to the second mobility management network element.

In the foregoing technical solution, the terminal device generates the message authentication code based on the first security protection key and the registration request, and sends the message authentication code and the registration request together to the second mobility management network element. Correspondingly, the second mobility management network element may send the message authentication code and the registration request together to the first mobility management network element, where the message authentication code may be used by the first mobility management network element to verify the registration request. In this way, the terminal device does not need to perform primary authentication in the HPLMN for the second time based on the identity credential of the 3GPP access type. This helps improve network performance.

In a possible implementation, the terminal device further receives a second key set identifier from the second mobility management network element, where the second key set identifier identifies a second security context of the second non-access stratum connection, and the second security context includes the second mobility management network element key and the second security protection key. For example, the second key set identifier is carried in a non-access stratum security mode command.

Alternatively, the terminal device further receives a first key set identifier and a second key set identifier from the second mobility management network element. The first key set identifier identifies a first security context of the first non-access stratum connection, and the first security context includes the first mobility management network element key and the first security protection key. For example, the first key set identifier and the second key set identifier are carried in a non-access stratum security mode command.

In a possible implementation, the terminal device further initializes a count value of the message transmitted on the second non-access stratum connection. In this way, the terminal device can perform message transmission with the second mobility management network element on the second non-access stratum connection based on the initialized count value.

In a possible implementation, that the terminal device generates the second mobility management network element key based on the first mobility management network element key may be specifically: The terminal device generates the second mobility management network element key based on the first mobility management network element key and first information. The first information includes one or more of the following: an identifier of a key generation function; a count value of the message transmitted on the first non-access stratum connection; a direction of the message transmitted on the first non-access stratum connection; an identifier of the 3GPP access type; an identifier of a public land mobile network to which the first mobility management network element belongs; and an identifier of a public land mobile network to which the second mobility management network element belongs. In an example, the direction of the message transmitted on the first non-access stratum connection is downlink, and the count value of the message transmitted on the first non-access stratum connection is equal to a quantity of times that the terminal device receives, on the first non-access stratum connection based on the first security protection key, a downlink message from the first mobility management network element. In another example, the direction of the message transmitted on the first non-access stratum connection is uplink, and the count value of the message transmitted on the first non-access stratum connection is equal to a quantity of times that the terminal device sends, on the first non-access stratum connection based on the first security protection key, an uplink message to the first mobility management network element.

In the foregoing technical solution, specific input parameters used when the terminal device generates the second mobility management network element key based on the first mobility management network element key are provided. These specific input parameters are same input parameters respectively maintained by the terminal device and the first mobility management network element. In this way, the terminal device and the first mobility management network element may separately generate a same second mobility management network element key based on these input parameters.

According to a third aspect, this application provides a communication method. The communication method may be performed by a second mobility management network element. The second mobility management network element may be a network element in a hardware device, may run a software function on dedicated hardware, or may be a virtualized function instantiated on a platform (for example, a cloud platform). Optionally, the second mobility management network element may be implemented by one device, may be jointly implemented by a plurality of devices, or may be a functional module in one device.

The communication method includes: The second mobility management network element receives a registration request from a terminal device, where the registration request includes indication information, and the indication information indicates dual 3GPP access; and the second mobility management network element sends a first message to a first mobility management network element, where the first message includes the registration request, and a first non-access stratum connection that is based on a 3GPP access type exists between the terminal device and the first mobility management network element. The second mobility management network element receives a second message from the first mobility management network element, where the second message is used to respond to the first message, and the second message includes a second mobility management network element key. The second mobility management network element generates a second security protection key based on the second mobility management network element key, where the second security protection key is used to perform security protection on a message transmitted on a second non-access stratum connection, and the second non-access stratum connection is a connection that is between the terminal device and the second mobility management network element and that is based on the 3GPP access type. Optionally, the second mobility management network element sends a registration response to the terminal device, where the registration response is a response corresponding to the registration request, and the registration response is, for example, a registration accept message.

In the foregoing technical solution, when determining that the registration request indicates the dual 3GPP access, that is, when determining that the terminal device requests to establish the second non-access stratum connection to the second mobility management network element based on the 3GPP access type, the second mobility management network element sends the registration request to the first mobility management network element, and further obtains the second mobility management network element key from the first mobility management network element, to implement security protection on the message transmitted on the second non-access stratum connection, thereby improving security in a dual 3GPP scenario. In other words, after receiving the second mobility management network element key, the second mobility management network element generates the second security protection key based on the second mobility management network element key, and performs, based on the second security protection key, security protection on the message transmitted on the second non-access stratum connection, to improve security.

In addition, if the registration request indicates the dual 3GPP access, after receiving the registration request from the terminal device, the second mobility management network element may send the registration request to the first mobility management network element to obtain the second mobility management network element key, and the second mobility management network element may no longer indicate the terminal device to perform primary authentication in an HPLMN for the second time based on an identity credential of the 3GPP access type. This helps avoid an unnecessary procedure and improve network performance.

In a possible implementation, the second mobility management network element key is generated based on a first mobility management network element key, the first mobility management network element key is used to derive a first security protection key, the first security protection key is used to perform security protection on a message transmitted on the first non-access stratum connection, and the second mobility management network element key is used to derive the second security protection key.

In a possible implementation, the second mobility management network element further receives a message authentication code from the terminal device, and sends the message authentication code to the first mobility management network element through the first message, where the message authentication code is used by the first mobility management network element to verify the registration request.

In a possible implementation, the second message further includes a second key set identifier, the second key set identifier identifies a second security context of the second non-access stratum connection, the second security context includes the second mobility management network element key and the second security protection key, and the second key set identifier is generated based on a first key set identifier. The first key set identifier identifies a first security context of the first non-access stratum connection, and the first security context includes the first mobility management network element key and the first security protection key. The second mobility management network element further sends the second key set identifier to the terminal device. In a possible implementation, the second message further includes the first key set identifier, and the second mobility management network element further sends the first key set identifier to the terminal device.

In a possible implementation, the second message further includes the first key set identifier, and the first key set identifier identifies the first security context of the first non-access stratum connection. The second mobility management network element further generates the second key set identifier based on the first key set identifier, where the second key set identifier identifies the second security context of the second non-access stratum connection. The second mobility management network element sends the second key set identifier to the terminal device, or sends the first key set identifier and the second key set identifier to the terminal device.

In a possible implementation, a value of a type field included in the second key set identifier is the same as a value of a type field included in the first key set identifier, and a value of a value field included in the second key set identifier is different from a value of a value field included in the first key set identifier.

In a possible implementation, the second key set identifier is carried in a non-access stratum security mode command, or the first key set identifier and the second key set identifier are carried in a non-access stratum security mode command.

In a possible implementation, the second mobility management network element initializes a count value of the message transmitted on the second non-access stratum connection. In this way, the second mobility management network element may perform message transmission with the terminal device on the second non-access stratum connection based on the initialized count value.

According to a fourth aspect, an embodiment of this application provides a communication apparatus.

The apparatus has a function of implementing the first mobility management network element in any one of the first aspect or the possible implementations of the first aspect. The apparatus may be one device, or may include a plurality of devices, or may be a functional module in one device.

The apparatus may alternatively have a function of implementing the terminal device in any one of the second aspect or the possible implementations of the second aspect. The apparatus may be a terminal device, or may be a chip included in the terminal device.

The apparatus may also have a function of implementing the second mobility management network element in any one of the third aspect or the possible implementations of the third aspect. The apparatus may be one device, or may include a plurality of devices, or may be a functional module in one device.

A function of the communication apparatus may be implemented by hardware, or may be implemented by hardware executing corresponding software. The hardware or the software includes one or more modules, units, or means (means) corresponding to the function.

In a possible implementation, a structure of the apparatus includes a processing module and a transceiver module.

The processing module is configured to support the apparatus in performing a corresponding function of the first mobility management network element in any one of the first aspect or the implementations of the first aspect, or the processing module is configured to support the apparatus in performing a corresponding function of the terminal device in any one of the second aspect or the implementations of the second aspect, or in performing a corresponding function of the second mobility management network element in any one of the third aspect or the implementations of the third aspect. The transceiver module is configured to support communication between the apparatus and another communication device. For example, when the apparatus is the terminal device, the apparatus may send a registration request to the second mobility management network element. The communication apparatus may further include a storage module. The storage module is coupled to the processing module, and stores program instructions and data that are necessary for the apparatus. In an example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory, and may be configured to execute computer program instructions stored in the memory, to enable the apparatus to perform the method according to any one of the first aspect or the possible implementations of the first aspect, the method according to any one of the second aspect or the possible implementations of the second aspect, or the method according to any one of the third aspect or the possible implementations of the third aspect. Optionally, the apparatus further includes a communication interface, and the processor is coupled to the communication interface. When the apparatus is a network device or a terminal device, the communication interface may be a transceiver or an input/output interface. When the apparatus is a chip included in the network device or a chip included in the terminal device, the communication interface may be an input/output interface of the chip. Optionally, the transceiver may be a transceiver circuit, and the input/output interface may be an input/output circuit.

According to a fifth aspect, an embodiment of this application provides a chip system, including a processor and a memory. The processor is coupled to the memory, and the memory is configured to store a program or instructions. When the program or the instructions are executed by the processor, the chip system is enabled to implement the method according to any one of the first aspect or the possible implementations of the first aspect, the method according to any one of the second aspect or the possible implementations of the second aspect, or the method according to any one of the third aspect or the possible implementations of the third aspect.

Optionally, the chip system further includes an interface circuit, and the interface circuit is configured to exchange a code or an instruction with the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory ROM. The memory and the processor may be integrated on a same chip, or may be arranged on different chips respectively.

According to a sixth aspect, this application provides a computer-readable storage medium. The computer-readable storage medium stores a computer program or instructions. When the computer program or the instructions are executed by a communication apparatus, the communication apparatus is enabled to perform the method according to any one of the first aspect or the possible implementations of the first aspect, the method according to any one of the second aspect or the possible implementations of the second aspect, or the method according to any one of the third aspect or the possible implementations of the third aspect.

According to a seventh aspect, this application provides a computer program product. The computer program product includes a computer program or instructions. When the computer program or the instructions are executed by a communication apparatus, the method according to any one of the first aspect or the possible implementations of the first aspect, the method according to any one of the second aspect or the possible implementations of the second aspect, or the method according to any one of the third aspect or the possible implementations of the third aspect is implemented.

According to an eighth aspect, this application provides a communication method, including: A second mobility management network element receives a registration request from a terminal device, and sends a first message to a first mobility management network element, where the first message includes the registration request, the registration request includes indication information, the indication information indicates dual 3GPP access, and a first non-access stratum connection that is based on a 3GPP access type exists between the terminal device and the first mobility management network element; the first mobility management network element generates a second mobility management network element key based on a first mobility management network element key, and sends a second message to the second mobility management network element, where the first mobility management network element key is used to derive a first security protection key, and the first security protection key is used to perform security protection on a message transmitted on the first non-access stratum connection; and the second mobility management network element generates a second security protection key based on the second mobility management network element key included in the second message, where the second security protection key is used to perform security protection on a message transmitted on the second non-access stratum connection, and the second non-access stratum connection is a connection that is between the terminal device and the second mobility management network element and that is based on the 3GPP access type.

In a possible implementation, before the second mobility management network element receives the registration request from the terminal device, the method further includes: The terminal device sends the registration request to the second mobility management network element.

After the second mobility management network element generates the second security protection key based on the second mobility management network element key included in the second message, the method further includes: The terminal device generates the second mobility management network element key based on the first mobility management network element key.

According to a ninth aspect, this application provides a communication system, including a first mobility management network element and a second mobility management network element. The first mobility management network element is configured to implement the method in any one of the first aspect or the possible implementations of the first aspect. The second mobility management network element is configured to implement the method in any one of the third aspect or the possible implementations of the third aspect. In a possible implementation, the communication system further includes a terminal device, and the terminal device is configured to implement the method in any one of the second aspect or the possible implementations of the second aspect.

For specific implementations of the foregoing aspects, refer to each other. For technical effect that can be achieved in the foregoing aspects, refer to each other. Details are not described herein again.

### BRIEF DESCRIPTION OF DRAWINGS

FIG. 1 is a diagram of a 5G network architecture according to this application;
FIG. 2 is a diagram in which a terminal device accesses a core network by using a 3GPP access type and a non-3GPP access type according to this application;
FIG. 3 is a diagram of a 5G key derivation architecture according to this application;
FIG. 4 is a diagram in which a terminal device accesses a core network by using a dual 3GPP access type according to this application;
FIG. 5 is a schematic flowchart of a first communication method according to this application;
FIG. 6 is a schematic flowchart of a second communication method according to this application;
FIG. 7A and FIG. 7B are a schematic flowchart of a third communication method according to this application;
FIG. 8 is a diagram of a structure of a communication apparatus according to this application; and
FIG. 9 is a diagram of a structure of another communication apparatus according to this application.

### DESCRIPTION OF EMBODIMENTS

The following first describes related technical features in embodiments of this application. It should be noted that, these explanations are intended to make embodiments of this application easier to understand, but should not be construed as a limitation on the protection scope claimed in this application.

### 1. 5G network architecture

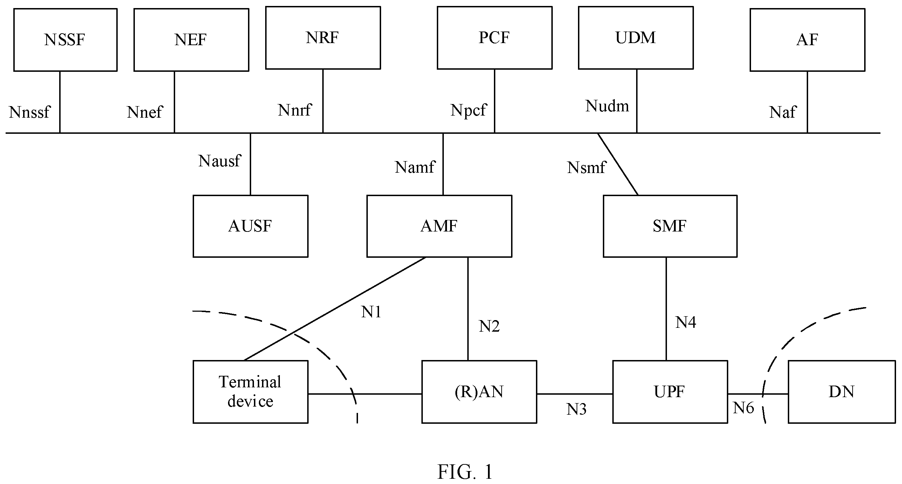

FIG. 1 is a diagram of a 5G network architecture. The 5G network architecture shown in FIG. 1 may include three parts: a terminal device part, a data network (data network, DN) part, and an operator network part. The following briefly describes functions of some network elements in the architecture.

The operator network may include one or more of the following network elements: an authentication server function (authentication server function, AUSF), a network exposure function (network exposure function, NEF), a policy control function (policy control function, PCF), unified data management (unified data management, UDM), a unified data repository (unified data repository, UDR), a network repository function (network repository function, NRF), an access and mobility management function (access and mobility management function, AMF), a session management function (session management function, SMF), an access network, a user plane function (user plane function, UPF), and the like. In the operator network, a part other than a radio access network part may be referred to as a core network part. In a possible implementation method, the operator network further includes an application function (application function, AF). Alternatively, the AF may not belong to the operator network, but belongs to a third party.

A terminal device (terminal device), which may also be referred to as user equipment (user equipment, UE), is a device that has a wireless transceiver function. The terminal device may be deployed on land, where the deployment includes indoor or outdoor, or handheld or vehicle-mounted deployment; may be deployed on water (for example, on a ship); or may be deployed in air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

The terminal device may establish a connection to the operator network through an interface (for example, N1) provided by the operator network, and use a service such as data and/or voice provided by the operator network. The terminal device may further access the DN through the operator network, and use an operator service deployed on the DN and/or a service provided by a third party. The third party may be a service party other than the operator network and the terminal device, and may provide services such as a data service and/or a voice service for the terminal device. A specific representation form of the third party may be specifically determined based on an actual application scenario, and is not limited herein.

The core network part includes a user plane function and a control plane function.

The user plane function includes a UPF. As an interface to the data network, the UPF completes functions such as forwarding of user plane data (for example, a data packet), quality of service (quality of service, QoS) control, session/flow-level charging statistics collection, and bandwidth limiting.

The control plane function is mainly for user registration and authentication, mobility management, delivery of a data packet forwarding policy and a QoS control policy to the user plane function, and the like. The control plane function may further include another network element other than the UPF, for example, the AMF and the SMF.

The AMF mainly performs functions such as a registration procedure during user access and location management and access authentication/authorization during user movement. In addition, the AMF is also responsible for transferring a user policy between the terminal device and the PCF. A connection between the terminal device and the AMF may be referred to as a non-access stratum (non-access stratum, NAS) connection, and a message transmitted between the terminal device and the AMF is a NAS message.

The SMF is mainly configured to: establish a corresponding session connection when a user initiates a service, and provide a specific service for the user, for example, deliver a data packet forwarding policy and a QoS policy to the UPF through an NG4 interface between the SMF and the UPF.

The AUSF is mainly responsible for authenticating the user, and determining validity of the terminal device, to determine whether to allow the terminal device to access the network.

The UDM is mainly responsible for functions such as storage of subscription data of the terminal device and user access authorization.

The UDR is mainly responsible for functions of storing and accessing type data such as subscription data, policy data, application data, and the like.

The PCF is mainly responsible for delivering a service-related policy to the AMF or the SMF.

The NEF is mainly configured to support capability and event exposure.

The AF mainly transfers a requirement of an application side on a network side to the PCF, so that the PCF generates a corresponding policy. The AF may be a third-party functional entity, or may be an operator-deployed application service, for example, an internet protocol (internet protocol, IP) multimedia subsystem (IP Multimedia Subsystem, IMS) voice call service.

The NRF may be configured to: provide a network element discovery function, and provide, based on a request of another network element, network element information corresponding to a network element type. The NRF further provides network element management services such as network element registration, update, and deregistration and network element status subscription and push.

The DN is a network located outside the operator network. The operator network may access a plurality of DNs, and a plurality of services may be deployed on the DN, to provide services such as data and/or a voice for the terminal device. For example, the DN is a private network of a smart factory, a sensor installed in a workshop of the smart factory may be a terminal device, a control server of the sensor is deployed in the DN, and the control server may serve the sensor. The sensor may communicate with the control server, to obtain instructions of the control server, transmit collected sensor data to the control server according to the instructions, and the like. For another example, the DN is an internal office network of a company, a mobile phone or a computer of an employee of the company may be a terminal device, and the mobile phone or the computer of the employee may access information, data resources, and the like in the internal office network of the company.

In FIG. 1, Nnssf, Nausf, Nnef, Nnrf, Npcf, Nudm, Naf, Namf, Nsmf, N1, N2, N3, N4, and N6 are interface sequence numbers. For meanings of the interface sequence numbers, refer to meanings defined in a 3GPP protocol. This is not limited herein.

It may be understood that the foregoing network elements or functions may be network elements in a hardware device, or may be software functions running on dedicated hardware or virtualized functions instantiated on a platform (for example, a cloud platform). Optionally, the network element or function may be implemented by one device, may be jointly implemented by a plurality of devices, or may be a functional module in one device. This is not specifically limited in embodiments of this application.

The access and mobility management function (which may also be referred to as a mobility management function), the authentication server function, and the unified data management in embodiments of this application may be respectively the AMF, the AUSF, and the UDM in FIG. 1, or a future communication network like a 6th generation (6th generation, 6G) network has network elements with functions of the AMF, the AUSF, and the UDM. This is not limited in embodiments of this application.

The access network is a sub-network of the operator network, and is an implementation system between a service node in the operator network and the terminal device. To access the operator network, the terminal device first passes through the access network, and may be connected to the service node in the operator network through the access network.

The access network may include a 3GPP access network and/or a non-3GPP access network. In other words, the terminal device may access the core network through the 3GPP access network and/or the non-3GPP access network. The non-3GPP access network is an access network other than 3GPP, such as a wireless local area network (wireless local area network, WLAN), a wireless fidelity (wireless fidelity, Wi-Fi) network, worldwide interoperability for microwave access (worldwide interoperability for microwave access, WiMAX), and a fixed network. An access type of the terminal device in the 3GPP access network may be referred to as a 3GPP access (3GPP access) type, and an access type of the terminal device in the non-3GPP access network may be referred to as a non-3GPP access (non-3GPP access) type.

An access device of the 3GPP access network may be a device that provides a wireless communication function for the terminal device, and an access device of the 3GPP access network may also be referred to as an access network device, a base station, or the like. The access device in the 3GPP access network includes but is not limited to: a next generation NodeB (gNodeB, gNB) in 5G, an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), a transmitting and receiving point (transmitting and receiving point, TRP), a transmitting point (transmitting point, TP), a mobile switching center, and the like. A message transmitted between the terminal device and the access device of the 3GPP access network may be a radio resource control (radio resource control, RRC) message, a user plane (user plane, UP) message, or the like. For ease of description, the following uses an example in which the access device of the 3GPP access network is a gNB for description.

An access device of the non-3GPP access network may be referred to as a non-3GPP interworking function (non 3GPP interworking function, N3IWF) device or a next generation access gateway (next generation packet data gateway, ngPDG). The N3IWF is similar to an evolved packet data gateway (evolved packet data gateway, ePDG) in long term evolution (long term evolution, LTE), and is configured to establish an internet protocol security (internet protocol security, IPsec) tunnel with the terminal device when the terminal device accesses the core network through the non-3GPP access network in 5G. In a definition of future 5G, a name of the N3IWF may be changed. In this application, only an example in which a non-3GPP network access gateway is the N3IWF device is used for description. For example, the N3IWF device may include a router and the like.

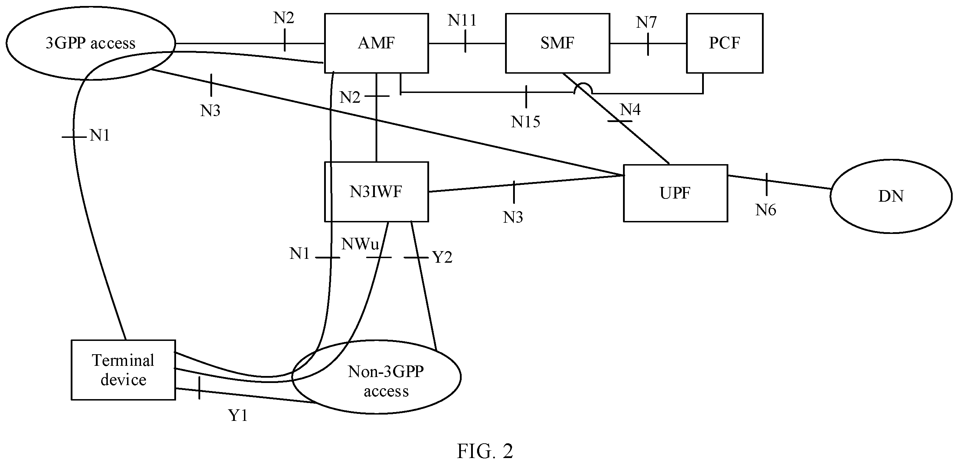

FIG. 2 is a diagram in which a terminal device separately accesses a core network by using a 3GPP access type and a non-3GPP access type. For descriptions of the network elements, refer to the descriptions in the embodiment related to FIG. 1.

### 2. 5G key derivation architecture

A key hierarchy includes the following keys: K, CK, IK, AUSF key (K_{AUSF}), SEAF key (K_{SEAF}), AMF key (K_{AMF}), NAS integrity key (K_{NASint}), NAS encryption key (K_{NASenc}), N3IWF key (K_{N3IWF}), gNB key (K_{gNB}), RRC integrity key (K_{RRCint}), RRC encryption key (K_{RRCenc}), UP integrity key (K_{UPint}), and UP encryption key (K_{UPenc}).

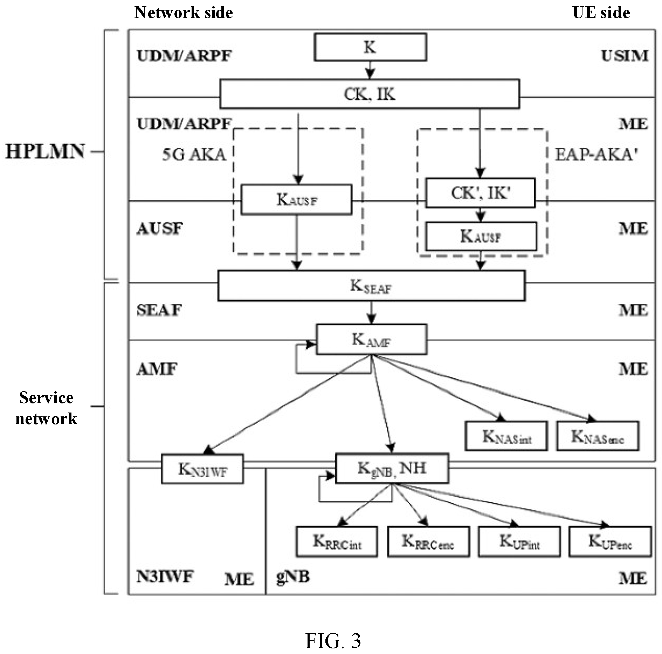

A diagram of a 5G key derivation architecture shown in FIG. 3 is explained as follows.

The following uses the network side as an example.

In an HPLMN, after primary authentication, the UDM derives the AUSF key based on the CK and the IK, and provides the AUSF key for an AUSF. The AUSF derives the SEAF key based on the AUSF key, and provides the SEAF key for an SEAF in a serving network.

In the serving network, the SEAF derives the AMF key based on the SEAF key, and provides the AMF key for an AMF.

The AMF derives the NAS integrity key and the NAS encryption key based on the AMF key. The NAS integrity key and the NAS encryption key may be used to protect a NAS message transmitted on a NAS connection between the AMF and the terminal device. In addition, the AMF may further derive the N3IWF key and the gNB key based on the AMF key, and provide the N3IWF key for an N3IWF. The N3IWF key is used to protect subsequent data traffic of non-3GPP access, and provide the gNB key and a next hop (next hop, NH) parameter to a gNB.

The gNB generates the RRC integrity key, the RRC encryption key, the UP integrity key, and the UP encryption key based on the gNB key and the NH parameter. The RRC integrity key and the RRC encryption key are used to protect an RRC message transmitted between the gNB and the terminal device. The UP integrity key and the UP encryption key are used to protect user plane data transmitted between the gNB and the terminal device.

Further, the NAS integrity key, the RRC integrity key, and the UP integrity key are all used to perform integrity protection on a message. The NAS encryption key, the RRC encryption key, and the UP encryption key are all used to perform encryption protection on a message.

The NAS integrity key and the NAS encryption key are used as an example.

When the AMF sends a downlink NAS message to the terminal device, the AMF and the terminal device may perform integrity protection on the downlink NAS message based on the NAS integrity key. Specifically, the AMF may generate, based on the NAS message and the NAS integrity key, a message authentication code (message authentication code, MAC) used to perform integrity protection on the NAS message, and send the NAS message and the MAC together to the terminal device. Correspondingly, the terminal device receives the MAC and the NAS message from the AMF, and performs integrity verification on the NAS message based on the MAC and the locally stored NAS integrity key. In addition, the AMF and the terminal device may further perform encryption protection on the downlink NAS message based on the NAS encryption key. Specifically, the AMF may encrypt the NAS message based on the NAS encryption key, to obtain an encrypted NAS message. Then, the AMF sends the encrypted NAS message to the terminal device. Correspondingly, the terminal device receives the encrypted NAS message from the AMF, and decrypts the encrypted NAS message based on the locally stored NAS encryption key.

Similarly, when the terminal device sends an uplink NAS message to the AMF, the terminal device and the AMF may perform integrity protection on the uplink NAS message based on the NAS integrity key, and perform encryption protection on the uplink NAS message based on the NAS encryption key. For details, refer to the descriptions that the AMF sends the downlink NAS message to the terminal device.

It may be understood that when the NAS message is transmitted between the AMF and the terminal device, both integrity protection and encryption protection may be performed, or one of the integrity protection and the encryption protection may be performed. In this application, integrity protection and encryption protection may be collectively referred to as security protection.

### 3. Key set identifier (NAS key set identifier, ngKSI) Key Set Identifier for Next Generation Radio Access Network

The ngKSI is used to identify a security context of a NAS connection. The ngKSI may be allocated by the AMF during master authentication and key agreement, or may be allocated by the AMF during an inter-system change. The ngKSI includes a value and a security context parameter type. The security context parameter type indicates whether the security context is a local security context or a mapped security context. When the security context is a native security context, the value of the ngKSI is KSI_{AMF}. When the security context is type mapping, the value of the ngKSI is KSI_{ASME}.

For example, the ngKSI occupies eight bits, and the lower 3 bits represent a NAS key set identifier, that is, a value (value). There may be seven values: from 000 to 110, and 111 indicates that no key is available. The fourth bit indicates a type (type). The value 0 indicates the local security context, and the value 1 indicates the mapped security context. The upper 4 bits indicate that the ngKSI belongs to a type 1 information element of the NAS key set identifier.

### 4. Access traffic steering, switching, and splitting (access traffic steering, switching, splitting, ATSSS)

The ATSSS technology supports a multipath transmission control protocol (multipath transmission control protocol, MPTCP) function, a multipath quick user datagram protocol internet connection (multipath quick UDP internet connection, MPQUIC) function, and an ATSSS low layer (ATSSS low layer, ATSSS-LL) function.

The MPTCP function is multi-path transmission of transmission control protocol (transmission control protocol, TCP) service traffic, the MPQUIC function is multi-path transmission of user datagram protocol (user datagram protocol, UDP) service traffic, and the ATSSS-LL function is multi-path transmission of internet protocol (internet protocol, IP) packets. The ATSSS-LL function may be used by the terminal device or the UPF to select a transmission path for a data packet based on a steering mode and a link status, and may support multi-path transmission of a TCP service and a UDP service.

The ATSSS technology supports the following steering modes (steering mode): an active-standby (active-standby) steering mode, a smallest delay (smallest delay) steering mode, a load balancing (load balancing) steering mode, a priority based (priority based) steering mode, a redundancy mode (redundancy mode), and a possible future steering mode, or the like.

In the active-standby steering mode, only one data channel is used for data transmission each time. Specifically, in the active-standby steering mode, one transmission path (3GPP access or non-3GPP access) may be specified as an active (active) state, and the other transmission path is specified as a standby (standby) state. When the active transmission path is available, all data of a service flow is transmitted to a peer end through the active transmission path. When the active path is unavailable, all data of the service flow is switched to the standby transmission path for transmission.

In the smallest delay steering mode, a transmission path with a shortest delay may be selected to transmit data of a service flow. In this mode, the terminal device or the UPF may monitor the transmission delay of the path in real time. For example, a transport layer protocol may be used to implement path monitoring (for example, an MPTCP layer has a function of detecting round trip time (round trip time, RTT)), or a performance measurement function (performance measurement function, PMF) module in the UPF may be used to implement path monitoring.

In the load balancing steering mode, data of a service flow may be distributed to different transmission paths in proportion for transmission, and a distribution proportion may be determined based on load statuses of two current transmission paths in a network. For example, a path with a heavier load has a smaller distribution proportion, and a path with a lighter load has a larger distribution proportion.

In the priority based steering mode, one transmission path may be specified as a transmission path with a high priority, and the other transmission path may be specified as a transmission path with a low priority. When the transmission path with a high priority has no congestion, all data of a service flow is transmitted through the transmission path with a high priority. When the transmission path with a high priority is congested, partial data of the service flow is transmitted through the transmission path with a low priority. When the transmission path with a high priority is unavailable, all data of the service flow is transmitted through the transmission path with a low priority.

Possible future steering modes may include a steering mode based on a user preference, a steering mode autonomously selected by the terminal device or the UPF, a steering mode based on a QoS requirement, and the like. This is not specifically limited in embodiments of this application.

With reference to the foregoing explanations of the technologies and terms in this application, the following describes embodiments of this application.

In 3GPP, a terminal device can separately access two different PLMNs based on one 3GPP access type and one non-3GPP access type. In other words, the terminal device can establish NAS connections to two different AMFs in the two different PLMNs, and maintains respective security contexts of the two NAS connections for the two NAS connections. Specifically, after performing primary authentication in an HPLMN based on an identity credential 1 of the 3GPP access type, the terminal device establishes a NAS connection 1 to an AMF 1, and maintains a security context of the NAS connection 1. After performing primary authentication in the HPLMN based on an identity credential 2 of the non-3GPP access type, the terminal device establishes a NAS connection 2 to an AMF 2, and maintains a security context of the NAS connection 2. Because identity credentials used when the terminal device accesses the two PLMNs by using the 3GPP access type and the non-3GPP access type are different, the terminal device needs to perform primary authentication on the HPLMN twice based on the two different identity credentials.

Based on the ATSSS technology, 3GPP further introduces a dual 3GPP access type scenario.

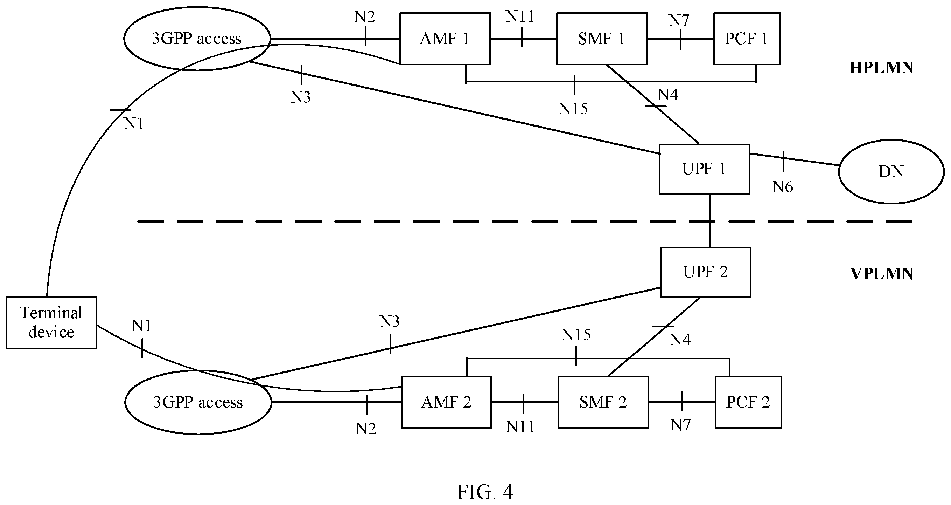

For example, the terminal device may separately access the two PLMNs based on the 3GPP access type. In other words, the terminal device may separately access the two PLMNs based on the two 3GPP accesses. FIG. 4 is a diagram of accessing two PLMNs by a terminal device according to this application. Specifically, when accessing an HPLMN based on a 3GPP access type, the terminal device establishes a NAS connection to an AMF 1 in the HPLMN. When accessing a VPLMN based on the 3GPP access type, the terminal device establishes a NAS connection to an AMF 2 in the VPLMN. Further, a UPF 1 in the HPLMN may be referred to as an anchor UPF, and a UPF 2 in the VPLMN is connected to the anchor UPF, so that the terminal device accesses a DN through a user plane connection between the terminal device and the UPF 2. For descriptions of the network elements, refer to the descriptions in the embodiment related to FIG. 1.

In addition, the terminal device may further separately access a same PLMN through two 3GPP accesses. The same PLMN includes an AMF 1 and an AMF 2. The terminal device may establish a NAS connection to the AMF 1 based on the 3GPP access type, and establish a NAS connection to the AMF 2 based on the 3GPP access type. This scenario may be understood by considering the HPLMN and the VPLMN in FIG. 4 as a same PLMN. The same PLMN may be the HPLMN or the VPLMN. This embodiment of this application is further applicable to other scenarios, and examples are not described one by one.

How to improve security of the dual 3GPP access scenario is a technical problem that needs to be urgently resolved currently.

Further, if the foregoing method for separately accessing the two different PLMNs based on one 3GPP access type and one non-3GPP access type is used in the dual 3GPP access type scenario, when the terminal device accesses the first PLMN based on the 3GPP access type, the terminal device needs to perform primary authentication in the HPLMN based on the identity credential 1 of the 3GPP access type. In addition, when accessing the second PLMN based on the 3GPP access type, the terminal device also needs to perform primary authentication in the HPLMN based on the identity credential 1 of the 3GPP access type. As described above, the terminal device performs same primary authentication twice in the HPLMN by using the same identity credential, and a procedure is redundant.

Therefore, this application provides a possible communication method. In a dual 3GPP access type scenario, a first NAS connection established based on a 3GPP access type exists between a terminal device and a first AMF. Further, when the terminal device needs to establish a second NAS connection to a second AMF based on the 3GPP access type, the terminal device may send a registration request to the second AMF, where the registration request indicates dual 3GPP access. Correspondingly, the second AMF requests a second AMF key from the first AMF, generates a second security protection key based on the second AMF key, and performs, based on the second security protection key, security protection on a message transmitted on the second NAS connection, thereby improving security in the dual 3GPP scenario.

For example, the first AMF may be the AMF 1 in FIG. 4, and the second AMF may be the AMF 2 in FIG. 4; or the first AMF may be the AMF 2 in FIG. 4, and the second AMF may be the AMF 1 in FIG. 4. The terminal device may be the terminal device in FIG. 4.

The first AMF may also be referred to as a first access and mobility management network element (function), a first mobility management network element (function), or the like. The second AMF may also be referred to as a second access and mobility management network element (function), a second mobility management network element (function), or the like. A PLMN to which the first AMF belongs is referred to as a first PLMN, and the first PLMN may be an HPLMN, or may be a visit public land mobile network (visit public land mobile network, VPLMN). A PLMN to which the second AMF belongs is referred to as a second PLMN, and the second PLMN may be an HPLMN or a VPLMN. The first PLMN is the same as or different from the second PLMN.

The first NAS connection is a NAS connection that is between the terminal device and the first AMF and that is based on the 3GPP access type, and the first NAS connection may also be referred to as a first non-access stratum connection. An uplink NAS message sent by the terminal device to the first AMF on the first NAS connection may be referred to as a first uplink message, and a downlink NAS message sent by the first AMF to the terminal device on the first NAS connection may be referred to as a first downlink message.

The second NAS connection is a NAS connection that is between the terminal device and the second AMF and that is based on the 3GPP access type, and the second NAS connection may also be referred to as a second non-access stratum connection. An uplink NAS message sent by the terminal device to the second AMF on the second NAS connection may be referred to as a second uplink message, and a downlink NAS message sent by the second AMF to the terminal device on the second NAS connection may be referred to as a second downlink message.

The first NAS connection is established before the second NAS connection, and coexistence of the two NAS connections is supported in the network.

A first key set identifier may also be referred to as a first ngKSI, and a second key set identifier may also be referred to as a second ngKSI.

Possible applicable scenarios of embodiments of this application are described in advance as follows:

The terminal device has accessed the first PLMN by using the 3GPP access type. In other words, the terminal device has performed primary authentication in the HPLMN based on an identity credential of the 3GPP access type of the terminal device, and establishes the first NAS connection to the first AMF in the first PLMN after the primary authentication. The terminal device and the first AMF each maintain a first security context of the first NAS connection.

The identity credential of the 3GPP access type is, for example, a credential included in a universal subscriber identity module (universal subscriber identity module, USIM) card of the terminal device.

The first security context may include at least one or more of the following parameters (1) to (7).
(1) First ngKSI: The first ngKSI is used to identify the first security context, or is used to identify a key set (for example, a first AMF key or a first security protection key) in the first security context.
(2) First AMF key: The first AMF key is derived from an SEAF key after primary authentication.
(3) First security protection key: The first security protection key is derived from the first AMF key. For example, the first security protection key may be a first NAS integrity key, or the first security protection key may be a first NAS encryption key, or the first security protection key includes a first NAS integrity key and a first NAS encryption key. The first security protection key may also be referred to as a first NAS key.
(4) First NAS count (NAS count) value: The first NAS count value is a count value of a message transmitted on the first NAS connection. The first NAS count value includes a first uplink NAS count value and/or a first downlink NAS count value.

For the terminal device, the first uplink NAS count value is a quantity of times that the terminal device performs security protection on the first uplink message on the first NAS connection by using the first security protection key. The first downlink NAS count value is a quantity of times that the terminal device performs security protection on the first downlink message on the first NAS connection by using the first security protection key.

For the first AMF, the first uplink NAS count value is a quantity of times that the first AMF performs security protection on the first uplink message on the first NAS connection by using the first security protection key. The first downlink NAS count value is a quantity of times that the first AMF performs security protection on the first downlink message on the first NAS connection by using the first security protection key.

(5) First NAS connection identifier (NAS connection identifier): The first NAS connection identifier identifies the first NAS connection.

(6) Identifier of the terminal device: The identifier of the terminal device may include at least one or more of the following: a globally unique temporary identifier (globally unique temporary identifier, GUTI), a temporary mobile subscriber identifier (temporary mobile subscriber identifier, TMSI), and a subscription permanent identifier (subscription permanent identifier, SUPI).

(7) Security capability of the terminal device: an integrity protection algorithm and an encryption algorithm that are supported by the terminal device.

Then, when the terminal device needs to establish a second NAS connection (namely, the second NAS connection) by using the 3GPP access type, the terminal device sends a registration request (registration request) to the second AMF in the second PLMN. In this case, no second NAS connection is established between the terminal device and the second AMF, and no second security context of the second NAS connection is maintained.

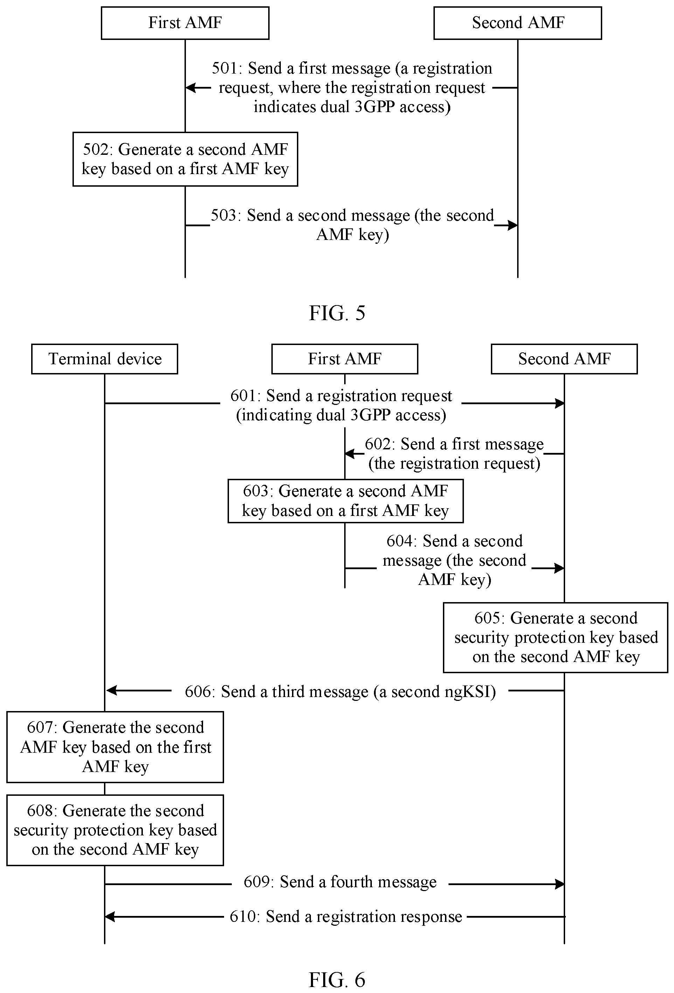

FIG. 5 is a schematic flowchart of an example of a first communication method according to this application. In the communication method, a second AMF obtains a second AMF key from a first AMF after receiving a registration request from a terminal device.

Step 501: The second AMF sends a first message to the first AMF.

Correspondingly, the first AMF receives the first message from the second AMF.

The first message includes the registration request from the terminal device. The registration request indicates dual 3GPP access (dual 3GPP access).

In an optional manner, the registration request includes indication information, and the indication information indicates the dual 3GPP access. Alternatively, it is understood that the registration request includes a registration type (registration request), and the registration type indicates the dual 3GPP access, that is, the registration type is the indication information. Optionally, the indication information has one or more of the following functions: indicating that two NAS connections established based on a 3GPP access type can exist in a network; indicating that the registration request is used to request a second NAS connection established based on the 3GPP access type; and indicating the second AMF to forward the registration request to the first AMF. For example, the indication information is a dual 3GPP access indication.

In a possible manner, after receiving the registration request from the terminal device, the second AMF determines that the terminal device requests the second NAS connection that is based on the 3GPP access type, and sends the first message to the first AMF, where the first message includes the registration request. Specifically, the second AMF may determine, based on the registration request, that the terminal device requests the second NAS connection that is based on the 3GPP access type. For example, the second AMF obtains the indication information from the registration request, to perform the foregoing determining based on the indication information.

Optionally, the registration request may further include an identifier of the terminal device, and the identifier of the terminal device may be used by the second AMF to determine the first AMF before sending the first message to the first AMF. In a possible manner, the identifier of the terminal device is specifically a GUTI. The GUTI may include a globally unique AMF identifier (globally unique AMF identifier, GUAMI) and a TMSI. After receiving the registration request from the terminal device, the second AMF may determine the GUAMI based on the GUTI in the registration request, further determine, based on information such as a mobile country code (mobile country code, MCC) and a mobile network code (mobile network code, MNC) in the GUAMI, a PLMN with which the terminal device registers, and then determine, based on an identifier of an AMF in the GUAMI, the first AMF from the PLMN with which the terminal device registers.

Optionally, the identifier of the terminal device may be further used by the first AMF to index a first security context. Alternatively, the registration request further includes a first ngKSI, and the identifier of the terminal device and the first ngKSI may be used by the first AMF to index the first security context, or the first ngKSI may be used by the first AMF to index the first security context. For details, refer to descriptions in the following step 502.

In a possible manner, a first security protection key is a first NAS integrity key. The terminal device may generate, based on the first NAS integrity key maintained by the terminal device and the registration request, a first MAC used to verify the registration request, and send the first MAC to the second AMF. For example, the first MAC and the registration request may be sent by the terminal device to the second AMF through one message.

Correspondingly, the second AMF sends the first message to the first AMF, where the first message includes the first MAC and the registration request. The first AMF obtains the first MAC and the registration request from the first message, and performs integrity check on the registration request based on the first NAS integrity key and the first MAC maintained by the first AMF. After it is determined that the received registration request passes the integrity check, the following step 502 is performed.

Further, the terminal device may not only generate the first MAC based on the first NAS integrity key and the registration request, but also generate the first MAC based on one or more of the following parameters: a first NAS count value, a transmission direction (specifically, uplink), and a first NAS connection identifier. For example, the terminal device inputs the first NAS integrity key, the registration request, the first NAS count value, the transmission direction (specifically, uplink), and the first NAS connection identifier into an integrity protection algorithm, to generate the first MAC according to the integrity protection algorithm. Similarly, the first AMF may input the parameters used by the terminal device to generate the first MAC, the received registration request, and the first MAC together into the integrity protection algorithm, to verify integrity of the registration request.

It should be supplemented that a local policy may be preset in the second AMF, and the local policy may indicate whether the second AMF can use an AMF key generated by another AMF. For example, after receiving the registration request from the terminal device, if it is determined, according to the local policy, that the second AMF can use an AMF key generated by another AMF, the second AMF sends the first message to the first AMF, where the first message includes the registration request; or if it is determined, according to the local policy, that the second AMF cannot use an AMF key generated by another AMF, the terminal device is indicated to perform primary authentication in an HPLMN based on an identity credential.

Step 502: The first AMF generates a second AMF key based on a first AMF key. The second AMF key is used to derive a second security protection key, and the second security protection key is used to perform security protection on a message transmitted on a second NAS connection.

The first AMF may obtain the first security context, obtain the first AMF key from the first security context, and then generate the second AMF key based on the first AMF key.

A process in which the first AMF obtains the first security context may specifically include the following examples.

Example (1): The first AMF obtains the registration request from the first message, and determines, based on the identifier of the terminal device in the registration request, the first security context corresponding to the identifier of the terminal device from a plurality of security contexts maintained by the first AMF.

Example (2): The first AMF obtains the registration request from the first message, determines, based on the identifier of the terminal device in the registration request, a plurality of security contexts corresponding to the identifier of the terminal device from the plurality of security contexts maintained by the first AMF, and then determines, based on the first ngKSI in the registration request, the first security context corresponding to the first ngKSI from the plurality of security contexts corresponding to the identifier of the terminal device.

Example (3): The first AMF obtains the registration request from the first message, and determines, based on the first ngKSI in the registration request, the first security context corresponding to the first ngKSI from the plurality of security contexts maintained by the first AMF.

A process in which the first AMF generates the second AMF key based on the first AMF key may be specifically as follows: The first AMF generates the second AMF key based on the first AMF key and first information.

For example, the first AMF inputs the first AMF key and the first information into an AMF key derivation function (key derivation function, KDF), and the AMF key derivation function outputs the second AMF key.

The AMF key derivation function may also be referred to as a key generation function. The AMF key derivation function is a key derivation function (denoted as an AMF key derivation function 1) that is defined in the 3GPP protocol and that is used to horizontally derive another AMF key from one AMF key, or is a key derivation function (denoted as an AMF key derivation function 2) that is redefined in this application and that is used to horizontally derive another AMF key (namely, the second AMF key) from one AMF (namely, the first AMF key) in a dual 3GPP access scenario.

The first information includes at least one or more of the following parameters (a) to (f).
(a) Identifier of the AMF key derivation function. For example, an identifier of the AMF key derivation function 1 defined in the 3GPP protocol is 0x72. An identifier of the AMF key derivation function 2 redefined in this application is 0x85.
(b) Count value of a message transmitted on the first NAS connection (equivalent to the first NAS count value in (4)).
(c) Direction (direction) of a message transmitted on the first NAS connection, referred to as a transmission direction for short.

For example, in an AMF handover scenario, a direction that is of a message transmitted on a NAS connection and that is input into the AMF key derivation function is downlink. In an idle (idle) state mobility registration update scenario, a direction that is of a message transmitted on a NAS connection and that is input into the AMF key derivation function is uplink. In the dual 3GPP access scenario, a direction that is of a message transmitted on a NAS connection and that is input into the AMF key derivation function is uplink.

For example, in an AMF handover scenario, a direction that is of a message transmitted on a NAS connection and that is input into the AMF key derivation function is downlink. In an idle (idle) state mobility registration update scenario, a direction that is of a message transmitted on a NAS connection and that is input into the AMF key derivation function is uplink. In the dual 3GPP access scenario, a direction that is of a message transmitted on a NAS connection and that is input into the AMF key derivation function is downlink.

For example, a value of uplink is 0x00, and a value of downlink is 0x11.

(d) 3GPP access type identifier (3GPP access type identifier). For example, a value is 0x01.

(e) Identifier of a first PLMN to which the first AMF belongs.

(f) Identifier of a second PLMN to which the second AMF belongs.

In a possible manner, the first information includes the transmission direction and the first NAS count value. For example, the transmission direction is downlink, and the first NAS count value is specifically a first downlink NAS count value. For another example, the transmission direction is uplink, and the first NAS count value is specifically a first uplink NAS count value.

In a possible manner, the first information not only includes a value of the parameter, but also may include a length of each parameter. For example, a length of the identifier of the AMF key derivation function, a length of the first NAS count value, a length of the transmission direction, a length of the identifier of the 3GPP access type, a length of the identifier of the first PLMN to which the first AMF belongs, and a length of the identifier of the second PLMN to which the second AMF belongs.

With reference to the parameters in the first information, the following provides an example of a manner in which a plurality of first AMFs generate the second AMF key.

Example 1: The first information includes the identifier "0x72" of the AMF key derivation function 1, the uplink "0x00", and the first uplink NAS count value "100". The first AMF inputs the parameters "0x72", "0x00", "100", and the first AMF key into the AMF key derivation function 1, to obtain an output of the AMF key derivation function 1, namely, the second AMF key.

Example 2: The first information includes the identifier "0x72" of the AMF key derivation function 1, the downlink "0x11", and the first downlink NAS count value "100". The first AMF inputs the parameters "0x72", "0x11", "100", and the first AMF key into the AMF key derivation function 1, to obtain an output of the AMF key derivation function 1, namely, the second AMF key.

Example 3: The first information includes the identifier "0x85" of the AMF key derivation function 2, the first downlink NAS count value "100", and a length "L1" of the first downlink NAS count value. The first AMF inputs the parameters "0x85", "100", "L1", and the first AMF key into the AMF key derivation function 2, to obtain an output of the AMF key derivation function 2, namely, the second AMF key.

Example 4: The first information includes the identifier "0x85" of the AMF key derivation function 2, the identifier "0x11" of the 3GPP access type, an identifier "PLMN 1" of the first PLMN to which the first AMF belongs, a length "L2" of the identifier of the first PLMN to which the first AMF belongs, the first downlink NAS count value "100", and a length "L1" of the first downlink NAS count value. The first AMF inputs the parameters "0x85", "0x11", "PLMN 1", "L2", "100", "L1", and the first AMF key into the AMF key derivation function 2, to obtain an output of the AMF key derivation function 2, namely, the second AMF key.

Example 5: The first information includes the identifier "0x85" of the AMF key derivation function 2, the identifier "0x11" of the 3GPP access type, a length "L0" of the 3GPP access type identifier, the first downlink NAS count value "100", and a length "L1" of the first downlink NAS count value. The first AMF inputs the parameters "0x85", "0x11", "L0", "100", "L1", and the first AMF key into the AMF key derivation function 2, to obtain an output of the AMF key derivation function 2, namely, the second AMF key.

It may be understood that the foregoing descriptions are merely several specific examples used to explain embodiments of this application, and do not constitute a limitation on this application. In this application, the first AMF may alternatively generate the second AMF key in another manner.

It should be supplemented that the first AMF may further generate a second ngKSI based on the first ngKSI. The second ngKSI is used to identify a second security context, or is used to identify a key set (for example, the second AMF key or the second security protection key) in the second security context. For descriptions of the second security context, refer to descriptions in the following embodiment related to FIG. 6.

When generating the second ngKSI based on the first ngKSI, the first AMF may specifically determine that a value of a type field in the second ngKSI is the same as a value of a type field in the first ngKSI, and determine that a value of a value field in the second ngKSI is different from a value of a value field in the first ngKSI. The value of the type field in the first ngKSI (or the second ngKSI) may be specifically 0, indicating that a security context identified by the first ngKSI (or the second ngKSI) is a local security context.

When the first AMF determines the value of the value field in the second ngKSI, the following content is included.

In a possible example, when the first AMF determines that the value in the value field of the first ngKSI is less than 110, if it is determined that a value obtained by adding 1 to the value in the value field of the first ngKSI is not used, the value obtained by adding 1 is used as the value in the value field of the second ngKSI; and if it is determined that the value obtained by adding 1 to the value in the value field of the first ngKSI is already used, 1 is continuously added and it is determined whether a value obtained by continuously adding 1 is used, until an unused value is determined as the value in the value field of the second ngKSI.

When the first AMF determines that the value in the value field of the first ngKSI is equal to 110, that is, determines that the value in the value field of the ngKSI is a maximum value (where 111 represents that no key is available), the first AMF further determines whether a minimum value 000 is used. If it is determined that the minimum value 000 is not used, the minimum value 000 is used as the value in the value field of the second ngKSI; if it is determined that the minimum value 000 is used and a value obtained by adding 1 to the minimum value 000 is not used, the value obtained by adding 1 to the minimum value 000 is used as the value in the value field of the second ngKSI; and if it is determined that the value obtained by adding 1 to the minimum value 000 is used, 1 is continuously added and it is determined whether a value obtained by continuously adding 1 is used, until an unused value is determined as the value in the value field of the second ngKSI.

In still another possible example, the first AMF randomly selects an unused value as the value in the value field of the second ngKSI.

That the first AMF determines whether a value is used may be specifically that the first AMF determines whether the value is used by the terminal device, or determines whether the value already corresponds to the identifier (for example, the GUTI) of the terminal device.

Optionally, the first AMF may further determine an SUPI of the terminal device based on the GUTI of the terminal device.

Step 503: The first AMF sends a second message to the second AMF.

Correspondingly, the second AMF receives the second message from the first AMF.

The second message includes the second AMF key. The second message may be specifically a response to the first message.

Optionally, when the first AMF further generates the second ngKSI based on the first ngKSI, the second message further includes the second ngKSI. In addition, the first AMF may alternatively not generate the second ngKSI based on the first ngKSI, but send the first ngKSI to the second AMF through the second message.

Optionally, the second message further includes one or more of the following: a key derivation indication, the SUPI of the terminal device, a security capability of the terminal device, and the identifier of the AMF key derivation function. The key derivation indication is used to notify the second AMF that the second AMF key is derived from the first AMF. Correspondingly, the second AMF may retain the second AMF key based on the key derivation indication, and use the second AMF key as an AMF key corresponding to the second NAS connection. For example, the key derivation indication is a horizontal key derivation indication, and the horizontal key derivation indication is, for example, keyAmfHDerivationInd.

During specific implementation, the first message may be a context transmission request, and correspondingly, the second message may be a context transmission response. For example, the context transmission request is a Namf_Communication_UEContextTransfer message, and the context transmission response is a Namf_Communication_UEContextTransfer response message. Alternatively, the first message may be an N1 message notification, and correspondingly, the second message may be a context creation response. For example, the N1 message notification is a Namf_Communication_N1MessageNotify message, and the context creation response is a Namf_Communication_CreateUEContext message. Alternatively, the first message may be a dual 3GPP access security context transmission request, and correspondingly, the second message may be a dual 3GPP access security context transmission response. For example, the dual 3GPP access security context transmission request is a Namf_Dual3GPPaccessSecurityContextTransfer message, and the dual 3GPP access security context transmission response is a Namf_Dual3GPPaccessSecurityContextTransfer response message.

It should be noted that, because the first NAS connection still exists in the network, the first AMF still needs to maintain the first security context. For example, after sending the second message to the second AMF, the first AMF determines, based on the indication information (that is, the registration type of the dual 3GPP access), to continue to maintain the first security context, that is, retain/not delete the first security context.

FIG. 6 is a schematic flowchart of a second communication method according to an example of this application. The communication method further describes a process of establishing a second NAS connection between a terminal device and a second AMF. For content that is not described in detail, refer to descriptions in the embodiment related to FIG. 5.

Step 601: The terminal device sends a registration request to the second AMF. Correspondingly, the second AMF receives the registration request from the terminal device. For descriptions of the registration request, refer to the description in step 501.

Step 602: The second AMF sends a first message to a first AMF. Correspondingly, the first AMF receives the first message from the second AMF. The first message includes the registration request from the terminal device. For descriptions of the first message, refer to the description in step 501.

Step 603: The first AMF generates a second AMF key based on a first AMF key. For specific implementation, refer to the description in step 502.

Step 604: The first AMF sends a second message to the second AMF. Correspondingly, the second AMF receives the second message from the first AMF. The second message includes the second AMF key. For specific implementation, refer to the description in step 503.

Step 605: The second AMF generates a second security protection key based on the second AMF key.

Specifically, the second AMF obtains the second AMF key from the second message, and generates the second security protection key based on a NAS key derivation function and the second AMF key. For example, the second security protection key may be a second NAS integrity key, or the second security protection key may be a second NAS encryption key, or the second security protection key includes a second NAS integrity key and a second NAS encryption key. The second security protection key may also be referred to as a second NAS key.

The second AMF may further initialize a count value (namely, a second NAS count value) of a message transmitted on the second NAS connection. For example, the second AMF determines that the second NAS count value is 0. Specifically, the second NAS count value includes a second NAS uplink count value and a second NAS downlink count value, and the second AMF determines that both the second NAS uplink count value and the second NAS downlink count value are 0. After the second AMF establishes the second NAS connection to the terminal device based on a 3GPP access type, each time the second AMF receives a second uplink message based on the second security protection key, that is, each time the second AMF performs security protection on the second uplink message based on the second security protection key, the second AMF determines that the second NAS uplink count value is increased by 1; and each time the second AMF sends a second downlink message based on the second security protection key, that is, each time the second AMF performs security protection on the second downlink message based on the second security protection key, the second AMF determines that the second NAS downlink count value is increased by 1.

Optionally, the second AMF further obtains a first ngKSI from the second message, and generates a second ngKSI based on the first ngKSI. A manner in which the second AMF generates the second ngKSI is similar to a manner in which the first AMF generates the second ngKSI.

It may also be understood that, after receiving the second message, the second AMF generates a second security context of the second NAS connection, where the second security context includes one or more of the following parameters: the second AMF key, the second security protection key, the second ngKSI, the count value of the message transmitted on the second NAS connection, an SUPI of the terminal device, a security capability of the terminal device, and an identifier of the NAS key derivation function.

Step 606: The second AMF sends a third message to the terminal device.

Correspondingly, the terminal device receives the third message from the second AMF.

The third message is, for example, a non-access stratum security mode command (non-access stratum security mode command, NAS SMC).

The third message includes the second ngKSI. The second ngKSI is used by the terminal device to associate with a plurality of keys (for example, the second AMF key and the second security protection key) generated by the terminal device, or the second ngKSI is used to identify a second security context generated by the terminal device. The second security context generated by the terminal device is the same as the second security context generated by the second AMF.

The third message may further include one or more of the following: a key update indication, the first ngKSI, the identifier of the NAS key derivation function, and an identifier of an AMF key derivation function. The key update indication is used to notify the terminal device that the terminal device needs to generate a new AMF key, and the key update indication is, for example, K_AMF_change_flag=1. The first ngKSI may be used by the terminal device to index a first security context from a plurality of locally maintained security contexts, to obtain the first AMF key from the first security context. The identifier of the AMF key derivation function is used by the terminal device to determine the AMF key derivation function used to generate the second AMF key. The identifier of the NAS key derivation function is used by the terminal device to determine the NAS key derivation function used to generate the second security protection key.

Step 607: The terminal device generates the second AMF key based on the first AMF key.

The terminal device may obtain the first security context, obtain the first AMF key from the first security context, and then generate the second AMF key based on the first AMF key.

In a specific implementation in which the terminal device obtains the first security context, the terminal device obtains the first ngKSI from the third message, and then determines, based on the first ngKSI, the first security context corresponding to the first ngKSI from the plurality of security contexts maintained by the terminal device.

When generating the second AMF key based on the first AMF key and the AMF key derivation function, the terminal device may specifically input the first AMF key and first information into the AMF key derivation function, and the AMF key derivation function outputs the second AMF key. For details of the first information and the derivation manner, refer to the descriptions of performing key derivation by the first AMF in step 502. When the first information includes a first NAS count value, that is, when the first NAS count value is used as an input parameter of the AMF key derivation function, to ensure that a first NAS count value input by the first AMF is the same as a first NAS count value input by the terminal device, the terminal device may further add, to the registration request, a first NAS count value recorded by the terminal device when the terminal device sends the registration request. Correspondingly, the first AMF may obtain the first NAS count value from the registration request, and input the first NAS count value into the AMF key derivation function, to obtain the second AMF key. Similarly, the terminal device may also input the first NAS count value carried in the registration request into the AMF key derivation function, to obtain the second AMF key.

In a specific implementation, the terminal device obtains the key update indication, the first ngKSI, and the identifier of the AMF key derivation function from the third message. Further, the terminal device determines, based on the key update indication, that a new AMF key needs to be generated, determines the first security context based on the first ngKSI, and obtains the first AMF key from the first security context. The AMF key derivation function is determined based on the identifier of the AMF key derivation function, and then the second AMF key is generated based on the first AMF key and the AMF key derivation function.

Step 608: The terminal device generates the second security protection key based on the second AMF key.

In a specific implementation, the terminal device obtains the identifier of the NAS key derivation function from the third message, determines the NAS key derivation function based on the identifier of the NAS key derivation function, and then generates the second security protection key based on the second AMF key and the NAS key derivation function.

The terminal device may further initialize the count value (namely, the second NAS count value) of the message transmitted on the second NAS connection. For example, the terminal device determines that the second NAS count value is 0. Specifically, the second NAS count value includes the second NAS uplink count value and the second NAS downlink count value, and the terminal device determines that both the second NAS uplink count value and the second NAS downlink count value are 0. After the terminal device establishes the second NAS connection to the second AMF based on the 3GPP access type, each time the terminal device sends the second uplink message based on the second security protection key, that is, each time the terminal device performs security protection on the second uplink message based on the second security protection key, the terminal device determines that the second NAS uplink count value is increased by 1; and each time the terminal device receives the second downlink message based on the second security protection key, that is, each time the terminal device performs security protection on the second downlink message based on the second security protection key, the terminal device determines that the second NAS downlink count value is increased by 1.

It should be supplemented that the AMF key derivation function may be pre-agreed on or preconfigured by the first AMF and the terminal device, the first AMF does not need to send the identifier of the AMF key derivation function to the second AMF, and the second AMF does not need to send the identifier of the AMF key derivation function to the terminal device. Similarly, the NAS key derivation function may be pre-agreed on or preconfigured by the second AMF and the terminal device, and the second AMF does not need to send the identifier of the NAS key derivation function to the terminal device.

When sending the registration request to the second AMF, the terminal device may record a key set identifier (namely, the first ngKSI) corresponding to the first security protection key used to perform security protection on the registration request. Correspondingly, after receiving the third message, the terminal device may determine the first security context based on the first ngKSI recorded by the terminal device, and obtain the first AMF key from the first security context. Alternatively, the terminal device maintains only one security context (namely, the first security context). Correspondingly, after receiving the third message, the terminal device may directly obtain the first AMF key from the first security context. Then, the terminal device may generate the second AMF key based on the first AMF key. In other words, in this case, the third message does not need to carry the first ngKSI.

Optionally, to ensure integrity of the third message transmitted between the second AMF and the terminal device, the second AMF further generates, based on the second NAS integrity key maintained by the second AMF and the third message, a second MAC used to verify the third message, and sends the second MAC and the third message to the terminal device. Correspondingly, the terminal device obtains the first ngKSI from the third message, but generates the second AMF key based on the first AMF key indicated by the first ngKSI, generates the second NAS integrity key based on the second AMF key, and then performs integrity check on the third message based on the second NAS integrity key and the second MAC. For a specific manner in which the second AMF and the terminal device perform integrity protection on the third message based on the second NAS integrity key, refer to the foregoing manner in which the first AMF and the terminal device perform integrity protection on the registration message based on the first NAS integrity key. Details are not described herein again.

Optionally, after sending the second MAC and the third message to the terminal device, the second AMF enables the second NAS encryption key. Correspondingly, the terminal device receives the second MAC and the third message, and enables the second NAS encryption key after determining, based on the second NAS integrity key and the second MAC, that integrity check on the third message succeeds. In this way, the terminal device and the second AMF may further perform encryption protection on the NAS message on the second NAS connection based on the second NAS encryption key.

The terminal device forms the second security context of the second NAS connection by using the second ngKSI, the second AMF key, the second security protection key, the count value (namely, the second NAS count value) of the message transmitted on the second NAS connection, and the like. Optionally, the second security context further includes the SUPI of the terminal device, the security capability of the terminal device, the identifier of the AMF key derivation function, and the identifier of the NAS key derivation function.

Further, the terminal device includes a USIM card and a nonvolatile memory. When determining that the USIM card supports storage of a security context, the terminal device stores the second security context in the USIM card. When determining that the USIM card does not support storage of a security context, the terminal device stores the second security context in the nonvolatile memory.

Step 609: The terminal device sends a fourth message to the second AMF.

Correspondingly, the second AMF receives the fourth message from the terminal device.

The fourth message is a message of the terminal device in response to the third message. For example, when the third message is the NAS SMC, the fourth message may be NAS SMC completion.

For example, when the terminal device sends the fourth message to the second AMF, the following content is included.

The terminal device may not only perform integrity protection on the fourth message based on the second NAS integrity key, but also encrypt the fourth message based on the second NAS encryption key. Specifically, the terminal device encrypts the fourth message based on the second NAS encryption key, to obtain an encrypted fourth message, and sends the encrypted fourth message to the second AMF. Correspondingly, the second AMF receives the encrypted fourth message, and decrypts the encrypted fourth message based on the second NAS encryption key maintained by the second AMF, to obtain the fourth message.

Further, the terminal device may not only encrypt the fourth message based on the second NAS encryption key, but also encrypt the fourth message based on one or more of the following parameters: the second NAS count value, a transmission direction (specifically, uplink), a second NAS connection identifier, and a length of a keystream generated according to an encryption algorithm. For example, the terminal device inputs the second NAS encryption key, the fourth message, the second NAS count value, the transmission direction (specifically, uplink), the second NAS connection identifier, and the length of the keystream generated according to the encryption algorithm into an encryption protection algorithm, and then the encryption protection algorithm outputs a keystream parameter. Then, the fourth message is encrypted based on the keystream parameter, to obtain an encrypted fourth message. Similarly, the second AMF may input, to the encryption protection algorithm, these parameters used by the terminal device to encrypt the fourth message and the received encrypted fourth message, and the encryption protection algorithm outputs the decrypted fourth message (namely, the original fourth message).

It may be understood that the terminal device may first generate the second MAC based on the second NAS integrity key maintained by the terminal device and the fourth message, and encrypt the fourth message based on the second NAS encryption key maintained by the terminal device, to obtain the encrypted fourth message. Correspondingly, the second AMF decrypts the encrypted fourth message based on the second NAS encryption key maintained by the second AMF, to obtain the fourth message, and then performs integrity check on the fourth message based on the second NAS integrity key and the second MAC maintained by the second AMF.

Certainly, herein, alternatively, the terminal device may first encrypt the fourth message based on the second NAS encryption key maintained by the terminal device, and then generate the second MAC based on the second NAS integrity key maintained by the terminal device and the encrypted fourth message. Correspondingly, the second AMF may first perform integrity check on the encrypted fourth message based on the second NAS integrity key and the second MAC maintained by the second AMF, and after determining that the integrity check on the encrypted fourth message succeeds, decrypt the encrypted fourth message based on the second NAS encryption key maintained by the second AMF.

Step 610: The second AMF sends a registration response to the terminal device.

Correspondingly, the terminal device receives the registration response from the second AMF.

The registration response is a response corresponding to the registration request. The registration response may be specifically a registration accept (registration accept) message.

After the second AMF successfully sends the registration response to the terminal device, it may be considered that the second NAS connection that is based on the 3GPP access type is successfully established between the second AMF and the terminal device. Then, a message may be transmitted between the second AMF and the terminal device through the second NAS connection. In addition, security protection is performed on the message transmitted on the second NAS connection through the second security protection key, to improve security in a dual 3GPP scenario.

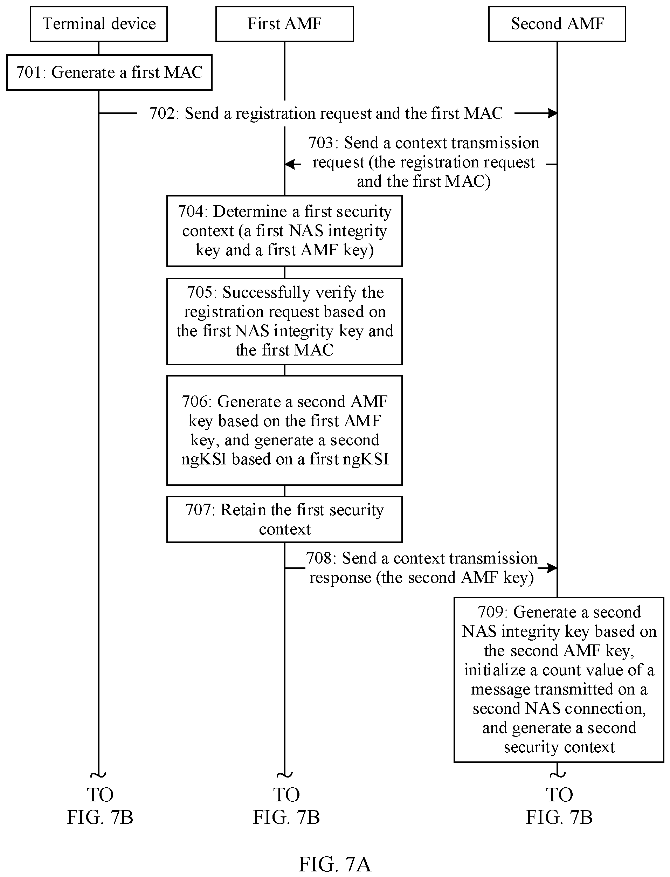

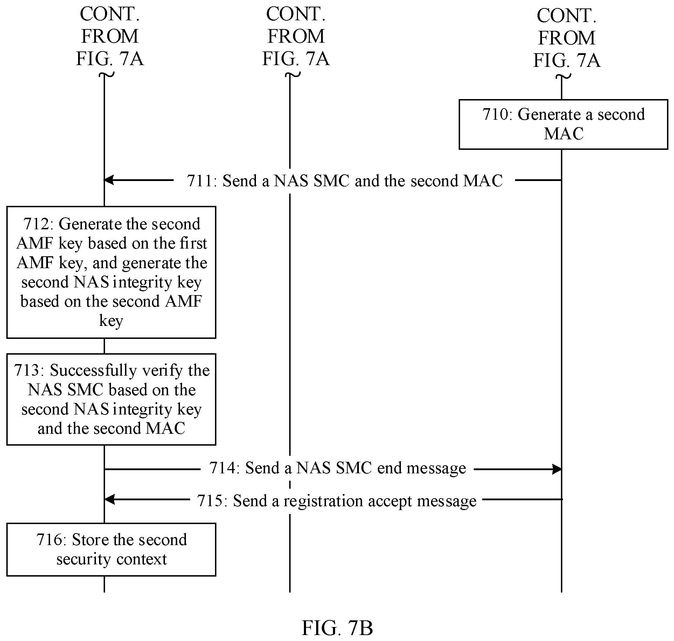

With reference to the first communication method and the second communication method, FIG. 7A and FIG. 7B are a schematic flowchart of a third communication method according to an example of this application. The third communication method is a complete and detailed procedure from initiation of a registration request by a terminal device to establishment of a second NAS connection between the terminal device and a second AMF.

In the third communication method described below, a context transmission request is an example of a first message, a context transmission response is an example of a second message, a NAS SMC is an example of a third message, NAS SMC completion is an example of the fourth message, a registration accept message is an example of a registration response, and a dual 3GPP access indication is an example of indication information.

Step 701: The terminal device generates a first MAC based on the registration request and a first NAS integrity key in the terminal device, where the first MAC is used to verify integrity of the registration request.

It may be understood that, before step 701, the terminal device has registered with a first AMF, and the terminal device and the first AMF each maintain a first security context of a first NAS connection. In addition, the terminal device and an HPLMN complete a primary authentication procedure.

Step 702: The terminal device sends the registration request and the first MAC to the second AMF, and correspondingly, the first AMF receives the registration request and the first MAC from the terminal device.

The registration request includes a GUTI of the terminal device, the dual 3GPP access indication (used as a value of the registration type), and a first ngKSI.

Step 703: The second AMF sends the context transmission request to the first AMF, and correspondingly, the first AMF receives the context transmission request from the second AMF. The context transmission request includes the registration request and the first MAC.

Step 704: The first AMF determines the first security context based on the GUTI and the first ngKSI. The first security context includes a first AMF key, the first NAS integrity key, the first ngKSI, and a security capability of the terminal device.

Step 705: The first AMF successfully verifies the registration request based on the first NAS integrity key and the first MAC.

Step 706: The first AMF generates a second AMF key based on the first AMF key, and generates a second ngKSI based on the first ngKSI.

Step 707: The first AMF retains the first security context (that is, does not delete the first security context).

Step 708: The first AMF sends the context transmission response to the second AMF, and correspondingly, the second AMF receives the context transmission response from the first AMF. The context transmission response includes a horizontal key derivation indication, the second AMF key, the first ngKSI, the second ngKSI, and an SUPI of the terminal device. The horizontal key derivation indication indicates that the second AMF key is derived from the first AMF.

Step 709: The second AMF generates a second NAS integrity key based on the second AMF key and a NAS key derivation algorithm. A count value of a message transmitted on the second NAS connection is initialized, to generate a second security context.

Step 710: The second AMF generates a second MAC based on the NAS SMC and the second NAS integrity key in the second AMF, where the second MAC is used to verify integrity of the NAS SMC.

Step 711: The second AMF sends the NAS SMC and the second MAC to the terminal device. Correspondingly, the terminal device receives the NAS SMC and the second MAC from the second AMF. The NAS SMC includes the first ngKSI, the second ngKSI, an identifier of the NAS key derivation algorithm, and a key update indication. The key update indication indicates the terminal device to regenerate an AMF key.

Step 712: The terminal device indexes the first security context based on the first ngKSI, further obtains the first AMF key from the first security context, and generates the second AMF key based on the first AMF key. Then, the second NAS integrity key is generated based on the second AMF key.

Step 713: The terminal device successfully verifies the NAS SMC based on the second NAS integrity key and the second MAC.

Step 714: The terminal device sends a NAS SMC end message to the second AMF. Correspondingly, the second AMF receives the NAS SMC end message from the terminal device.

Optionally, the terminal device performs integrity protection on the NAS SMC end message based on the second NAS integrity key in the terminal device. Optionally, the terminal device further performs encryption protection on the NAS SMC end message based on the second NAS encryption key in the terminal device.

Step 715: The second AMF sends the registration accept message to the terminal device. Correspondingly, the terminal device receives the registration accept message from the second AMF. Optionally, the second AMF performs integrity protection on the registration accept message based on the second NAS integrity key in the second AMF. Optionally, the second AMF performs encryption protection on the registration accept message based on the second NAS encryption key in the second AMF.

Step 716: The terminal device stores the second security context in a USIM or a nonvolatile memory.

It may be understood that, for content that is not described in detail in the embodiment related to FIG. 7A and FIG. 7B, refer to the descriptions in the embodiments related to FIG. 5 and FIG. 6. Specifically, for step 701 to step 703, refer to the descriptions in step 501, step 601, and step 602. For step 704 to step 707, refer to the descriptions in step 502 and step 603. For step 708, refer to the descriptions in step 503 and step 604. For step 709, refer to the description in step 605. For step 710 and step 711, refer to the description in step 606. For step 712 and step 716, refer to the descriptions in step 607 and step 608. For step 713 and step 714, refer to the description in step 609. For step 715, refer to the description in step 610.

In the foregoing technical solution, when requesting to establish the second NAS connection to the second AMF based on a 3GPP access type, the terminal device may send the registration request to the second AMF, where the registration request indicates dual 3GPP access. Correspondingly, the second AMF may forward the registration request to the first AMF. Therefore, the first AMF may generate, based on the first AMF key corresponding to the established first NAS connection, the second AMF key corresponding to the second NAS connection, and send the second AMF key to the second AMF. Then, the second AMF may generate a second security protection key based on the second AMF key, and perform, based on the second security protection key, security protection on the message transmitted on the second NAS connection, thereby improving security in a dual 3GPP scenario. In addition, in comparison with a method for separately accessing two different PLMNs based on one 3GPP access type and one non-3GPP access type, the registration request indicates dual 3GPP access, and after receiving the registration request, the second AMF no longer indicates the terminal device to perform primary authentication in the HPLMN for the second time based on an identity credential of the 3GPP access type. In this way, the terminal device only needs to perform primary authentication in the HPLMN based on the identity credential of the 3GPP access type when accessing the PLMN based on the 3GPP access type for the first time. When accessing a second PLMN based on the 3GPP access type for the second time, the terminal device does not need to perform primary authentication in the HPLMN based on the identity credential of the 3GPP access type, and does not need to generate the second AMF key after the primary authentication. This helps avoid an unnecessary procedure and improve network performance.

The following three points need to be further supplemented in this application:

Supplement 1: Step numbers in the flowcharts described in the embodiment related to FIG. 5 to the embodiment related to FIG. 7A and FIG. 7B are merely an example of an execution procedure, and do not constitute a limitation on an execution sequence of the steps. In embodiments of this application, there is no strict execution sequence between steps that have no time sequence dependency relationship with each other. Not all the steps shown in the flowcharts are mandatory steps. Some steps may be deleted from the flowcharts based on an actual requirement, or another possible step may be added to the flowcharts based on an actual requirement. Each of the three embodiments focuses on a difference from the other embodiments. Content other than the difference may be mutually referenced. In addition, in a same embodiment, different implementations or different examples may also be mutually referenced.

Supplement 2: The dual 3GPP access may be that the terminal device separately accesses two PLMNs through two 3GPP access types, or may be that the terminal device separately accesses two standalone non-public networks (standalone non-public network, SNPN) through two 3GPP access types, or may be that the terminal device accesses one PLMN through one 3GPP access type, and accesses an SNPN through another 3GPP access type.

When the first AMF belongs to the PLMN, and the second AMF belongs to the SNPN, in this application, the terminal device may further perform primary authentication in the HPLMN based on the identity credential of the 3GPP access type only when the terminal device accesses the PLMN based on the 3GPP access type for the first time, that is, when the terminal device establishes a first NAS connection to the first AMF, to generate a security context corresponding to the first NAS connection. Further, when the terminal device accesses the SNPN again based on the 3GPP access type, that is, when the terminal device establishes a second NAS connection to the second AMF, the security context corresponding to the first NAS connection is used to protect and authenticate the current access procedure, and a security key corresponding to the second NAS connection is derived.

When the first AMF belongs to the SNPN, and the second AMF belongs to the PLMN, in this application, the terminal device may further perform primary authentication in the HPLMN based on the identity credential of the 3GPP access type only when the terminal device accesses the SNPN based on the 3GPP access type for the first time, that is, when the terminal device establishes a first NAS connection to the first AMF, to generate a security context corresponding to the first NAS connection. Further, when the terminal device accesses the PLMN again based on the 3GPP access type, that is, when the terminal device establishes a second NAS connection to the second AMF, the security context corresponding to the first NAS connection is used to protect and authenticate the current access procedure, and a security key corresponding to the second NAS connection is derived.

When the first AMF belongs to a first SNPN, and the second AMF belongs to a second SNPN, in this application, the terminal device may further perform primary authentication in the HPLMN based on the identity credential of the 3GPP access type only when the terminal device accesses the first SNPN based on the 3GPP access type for the first time, that is, when the terminal device establishes a first NAS connection to the first AMF, to generate a security context corresponding to the first NAS connection. Further, when the terminal device accesses the second SNPN based on the 3GPP access type, that is, when the terminal device establishes a second NAS connection to the second AMF, the security context corresponding to the first NAS connection is used to protect and authenticate the current access procedure, and a security key corresponding to the second NAS connection is derived. Further, the first SNPN and the second SNPN are a same SNPN or different SNPNs.

Further, standards used by the two 3GPP access types are the same or different. For example, both the two 3GPP access types use terrestrial new radio (new radio, NR); or the two 3GPP access types respectively use terrestrial NR and a terrestrial UMTS evolved terrestrial radio access network (evolution UMTS terrestrial radio access network, E-UTRAN), where the UMTS is specifically a universal mobile telecommunication system (universal mobile telecommunication system), for example, a combination of an evolved packet core (evolved packet core, EPC) and a 5G core network (5G core network, 5GC/5GCN); or the two 3GPP access types use terrestrial NR and non-terrestrial NR respectively; or both the two 3GPP access types use non-terrestrial NR, for example, use a same non-terrestrial network (non-terrestrial network, NTN) orbit or different non-terrestrial networks (non-terrestrial network, NTN) orbits, where the NTN orbit is, for example, earth observation/medium orbit/low orbit.

Supplement 3: Embodiments of this application are not only applicable to a dual 3GPP access scenario, but also applicable to a multi-3GPP access scenario. An implementation of the multi-3GPP access scenario is similar to the implementation of the dual 3GPP access scenario. It may be considered that the first AMF is an AMF that has established a NAS connection to the terminal device, and the second AMF is an AMF that has not established a NAS connection to the terminal device. For example, a NAS connection 1 established based on the 3GPP access type exists between the terminal device and an AMF 1, and a NAS connection 2 established based on the 3GPP access type exists between the terminal device and an AMF 2. Further, when the terminal device needs to establish a NAS connection 3 to an AMF 3 based on the 3GPP access type, the terminal device may send a registration request to the AMF 3, where the registration request includes indication information, and the indication information indicates multi-3GPP access. Correspondingly, the AMF 3 sends a first request to the AMF 1, where the first request includes the registration request. The AMF 1 generates, based on the first request, an AMF key corresponding to the NAS connection 3, and sends the generated AMF key to the AMF 3. Herein, the AMF 3 and the AMF 1 are respectively the second AMF and the first AMF in this application. In addition, the AMF 3 may further send the first request to the AMF 2, and the AMF 3 and the AMF 2 are respectively the second AMF and the first AMF in this application. The "dual 3GPP access" in embodiments related to FIG. 5 to FIG. 7A and FIG. 7B may be replaced with the "multi-3GPP access" to understand the communication method corresponding to this scenario.

Embodiments described in this specification may be independent solutions, or may be combined based on internal logic. All of these solutions fall within the protection scope of this application. It may be understood that in the foregoing method embodiments, the methods and operations implemented by the terminal device may alternatively be implemented by a component (for example, a chip or a circuit) that can be used in the terminal device.

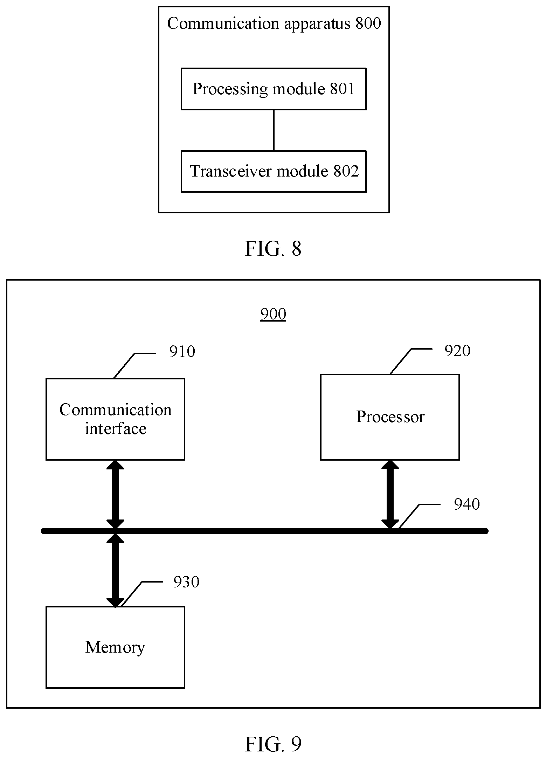

Based on the foregoing content and a same concept, FIG. 8 and FIG. 9 are diagrams of structures of possible communication apparatuses according to this application. These communication apparatuses may be configured to implement functions of the terminal device or the AMF in the foregoing method embodiments, and therefore can also implement beneficial effect of the foregoing method embodiments. In this application, the communication apparatus may be the terminal device shown in FIG. 1 or FIG. 4, or may be the AMF shown in FIG. 1 or FIG. 4.

As shown in FIG. 8, the communication apparatus 800 may include a processing module 801 and a transceiver module 802.

When the communication apparatus 800 is configured to implement the functions of the first AMF in the method embodiments shown in FIG. 5 to FIG. 7A and FIG. 7B, the following content is included.

The transceiver module 802 is configured to receive a first message from a second AMF, where the first message includes a registration request from a terminal device, the registration request includes indication information, the indication information indicates dual 3GPP access, and a first NAS connection based on a 3GPP access type exists between the terminal device and the first AMF. The processing module 801 is configured to generate a second AMF key based on a first AMF key. The transceiver module 802 is further configured to send a second message to the second AMF, where the second message is used to respond to the first message, and the second message includes the second AMF key. The first AMF key is used to derive a first security protection key, the first security protection key is used to perform security protection on a message transmitted on the first NAS connection, the second AMF key is used to derive a second security protection key, the second security protection key is used to perform security protection on a message transmitted on a second NAS connection, and the second NAS connection is a connection that is between the terminal device and the second AMF and that is based on the 3GPP access type.

In a possible implementation, the first message further includes a first MAC, and before the transceiver module 802 sends the second message to the second AMF, the processing module 801 is further configured to successfully verify the registration request based on the first security protection key and the first MAC.

In a possible implementation, the processing module 801 is further configured to retain a first security context of the first NAS connection, where the first security context includes the first AMF key and the first security protection key.

In a possible implementation, the second message further includes a second key set identifier, the second key set identifier identifies a second security context of the second NAS connection, and the second security context includes the second AMF key and the second security protection key. The processing module 801 is further configured to generate the second key set identifier based on a first key set identifier, where the first key set identifier identifies the first security context of the first NAS connection. In a possible implementation, the second message further includes the first key set identifier.

In a possible implementation, when generating the second AMF key based on the first AMF key, the processing module 801 is specifically configured to generate the second AMF key based on the first AMF key and first information, where the first information includes one or more of the following: an identifier of a key derivation function; a count value of a message transmitted on the first NAS connection; a direction of the message transmitted on the first NAS connection; an identifier of the 3GPP access type; an identifier of a public land mobile network to which the first AMF belongs; and an identifier of a public land mobile network to which the second AMF belongs.

When the communication apparatus 800 is configured to implement the functions of the terminal device in the method embodiments shown in FIG. 5 to FIG. 7A and FIG. 7B, the following content is included.

The transceiver module 802 is configured to send a registration request to a second AMF, where the registration request includes indication information, the indication information indicates dual 3GPP access, and a first NAS connection that is based on a 3GPP access type exists between the terminal device and a first AMF. The processing module 801 is configured to: generate a second AMF key based on a first AMF key, where the first AMF key is used to derive a first security protection key, the first security protection key is used to perform security protection on a message transmitted on the first NAS connection, the second AMF key is used to derive a second security protection key, the second security protection key is used to perform security protection on a message transmitted on a second NAS connection, and the second NAS connection is a connection that is between the terminal device and the second AMF and that is based on the 3GPP access type.

In a possible implementation, when sending the registration request to the second AMF, the transceiver module 802 is specifically configured to: generate, based on the first security protection key and the registration request, a first MAC used to verify the registration request, and send the registration request and the first MAC to the second AMF.

In a possible implementation, the transceiver module 802 is further configured to: receive a second key set identifier from the second AMF, or receive a first key set identifier and a second key set identifier from the second AMF. The first key set identifier identifies a first security context of the first NAS connection, and the first security context includes the first AMF key and the first security protection key. The second key set identifier identifies a second security context of the second NAS connection, and the second security context includes the second AMF key and the second security protection key.

In a possible implementation, the processing module 801 is configured to initialize a count value of the message transmitted on the second NAS connection.

In a possible implementation, when generating the second AMF key based on the first AMF key, the processing module 801 is specifically configured to generate the second AMF key based on the first AMF key and first information, where the first information includes one or more of the following: an identifier of a key derivation function; a count value of the message transmitted on the first NAS connection; a direction of the message transmitted on the first NAS connection; an identifier of the 3GPP access type; an identifier of a public land mobile network to which the first AMF belongs; and an identifier of a public land mobile network to which the second AMF belongs.

When the communication apparatus 800 is configured to implement functions of the second AMF in the method embodiments shown in FIG. 5 to FIG. 7A and FIG. 7B, the following content is included.

The transceiver module 802 is configured to: receive a registration request from a terminal device, where the registration request includes indication information, and the indication information indicates dual 3GPP access; and send a first message to a first AMF, where the first message includes the registration request from the terminal device, and a first NAS connection based on a 3GPP access type exists between the terminal device and the first AMF. The transceiver module 802 is further configured to receive a second message from the first AMF, where the second message includes a second AMF key. The processing module 801 is further configured to generate a second security protection key based on the second AMF key, where the second security protection key is used to perform security protection on a message transmitted on a second non-access stratum connection, and the second non-access stratum connection is a connection that is between the terminal device and the second AMF and that is based on the 3GPP access type.

In a possible implementation, the second AMF key is generated based on a first AMF key, the first AMF key is used to derive a first security protection key, and the first security protection key is used to perform security protection on a message transmitted on the first NAS connection.

In a possible implementation, the first message further includes a first MAC, the first MAC is used to verify the registration request, and the transceiver module 802 is further configured to receive the first MAC from the terminal device.

In a possible implementation, the second message further includes a second key set identifier, the second key set identifier identifies a second security context of a second NAS connection, the second security context includes the second AMF key and the second security protection key, and the second key set identifier is generated based on a first key set identifier. The first key set identifier identifies a first security context of the first NAS connection, and the first security context includes the first AMF key and the first security protection key. The transceiver module 802 is further configured to send the second key set identifier to the terminal device. For example, the second message further includes the first key set identifier, and the transceiver module 802 is further configured to send the first key set identifier to the terminal device.

In a possible implementation, the second message further includes the first key set identifier. The processing module 801 is further configured to generate the second key set identifier based on the first key set identifier, where the second key set identifier identifies the second security context of the second NAS connection, and the second security context includes the second AMF key and the second security protection key. The transceiver module 802 is further configured to: send the second key set identifier to the terminal device, or send the first key set identifier and the second key set identifier to the terminal device.

In a possible implementation, the processing module 801 is further configured to initialize a count value of the message transmitted on the second NAS connection.

FIG. 9 shows an apparatus 900 according to an embodiment of this application. The apparatus shown in FIG. 9 may be an implementation of a hardware circuit of the apparatus shown in FIG. 8. The apparatus is applicable to the foregoing flowcharts, and performs functions of the first AMF, the terminal device, or the second AMF in the foregoing method embodiments. For ease of description, FIG. 9 shows only main components of the apparatus.

The apparatus 900 shown in FIG. 9 includes a communication interface 910, a processor 920, and a memory 930. The memory 930 is configured to store program instructions and/or data. The processor 920 may operate in collaboration with the memory 930. The processor 920 may execute the program instructions stored in the memory 930. When the instructions or the program stored in the memory 930 is executed, the processor 920 is configured to perform operations performed by the processing module 801 in the foregoing embodiment, and the communication interface 910 is configured to perform operations performed by the transceiver module 802 in the foregoing embodiment.

The memory 930 is coupled to the processor 920. The coupling in embodiments of this application may be an indirect coupling or a communication connection between apparatuses, units, or modules in an electrical form, a mechanical form, or another form, and is used for information exchange between the apparatuses, the units, or the modules. At least one of the memories 930 may be included in the processor 920.

In embodiments of this application, the communication interface may be a transceiver, a circuit, a bus, a module, or a communication interface of another type. In embodiments of this application, when the communication interface is the transceiver, the transceiver may include an independent receiver and an independent transmitter, or may be a transceiver integrated with a transceiver function or a communication interface.

The apparatus 900 may further include a communication line 940. The communication interface 910, the processor 920, and the memory 930 may be connected to each other through the communication line 940. The communication line 940 may be a peripheral component interconnect (peripheral component interconnect, PCI for short) bus, an extended industry standard architecture (extended industry standard architecture, EISA for short) bus, or the like. The communication line 940 may be classified into an address bus, a data bus, a control bus, and the like. For ease of representation, only one thick line is used to represent the bus in FIG. 9, but this does not mean that there is only one bus or only one type of bus.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or some of procedures or functions in embodiments of this application are performed. The computer may be a general-purpose computer, a dedicated computer, a computer network, a network device, a user device, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium accessible by the computer, or a data storage device, like a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or nonvolatile storage medium, or may include two types of storage media: a volatile storage medium and a nonvolatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

Depending on whether optional is used in this specification: In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving, by a first mobility management network element, a first message from a second mobility management network element, wherein the first message comprises a registration request from a terminal device, the registration request comprises indication information, the indication information indicates dual 3GPP access, and a first non-access stratum connection that is based on a 3GPP access type exists between the terminal device and the first mobility management network element;
generating, by the first mobility management network element, a second mobility management network element key based on a first mobility management network element key; and
sending, by the first mobility management network element, a second message to the second mobility management network element, wherein the second message comprises the second mobility management network element key, wherein
the first mobility management network element key is used to derive a first security protection key, the first security protection key is used to perform security protection on a message transmitted on the first non-access stratum connection, the second mobility management network element key is used to derive a second security protection key, the second security protection key is used to perform security protection on a message transmitted on a second non-access stratum connection, and the second non-access stratum connection is a connection that is between the terminal device and the second mobility management network element and that is based on the 3GPP access type.

2. The method according to claim 1, wherein the first message further comprises a message authentication code, and before sending, by the first mobility management network element, the second message to the second mobility management network element, the method further comprises:
successfully verifying, by the first mobility management network element, the registration request based on the first security protection key and the message authentication code.

3. The method according to claim 1 or 2, further comprising:
retaining, by the first mobility management network element, a first security context of the first non-access stratum connection, wherein the first security context comprises the first mobility management network element key and the first security protection key.

4. The method according to any one of claims 1 to 3, wherein the second message further comprises a second key set identifier, the second key set identifier identifies a second security context of the second non-access stratum connection, and the second security context comprises the second mobility management network element key and the second security protection key; and
the method further comprises:
generating, by the first mobility management network element, the second key set identifier based on a first key set identifier, wherein the first key set identifier identifies the first security context of the first non-access stratum connection.

5. The method according to any one of claims 1 to 4, wherein the second message further comprises the first key set identifier, and the first key set identifier identifies the first security context of the first non-access stratum connection.

6. The method according to claim 4 or 5, wherein
a value of a type field comprised in the second key set identifier is the same as a value of a type field comprised in the first key set identifier; and
a value of a value field comprised in the second key set identifier is different from a value of a value field comprised in the first key set identifier.

7. The method according to any one of claims 1 to 6, wherein the first message is a context transmission request, and the second message is a context transmission response; or the first message is an N1 message notification, and the second message is a context creation response; or the first message is a dual 3GPP access security context transmission request, and the second message is a dual 3GPP access security context transmission response.

8. The method according to any one of claims 1 to 7, wherein generating, by the first mobility management network element, the second mobility management network element key based on the first mobility management network element key comprises:
generating, by the first mobility management network element, the second mobility management network element key based on the first mobility management network element key and first information, wherein the first information comprises one or more of the following:
an identifier of a key generation function;
a count value of the message transmitted on the first non-access stratum connection;
a direction of the message transmitted on the first non-access stratum connection;
an identifier of the 3GPP access type;
an identifier of a public land mobile network to which the first mobility management network element belongs; and
an identifier of a public land mobile network to which the second mobility management network element belongs.

9. The method according to claim 8, wherein
the direction of the message transmitted on the first non-access stratum connection is downlink; and
the count value of the message transmitted on the first non-access stratum connection is equal to a quantity of times that the first mobility management network element sends, on the first non-access stratum connection based on the first security protection key, a downlink message to the terminal device.

10. The method according to claim 8, wherein
the direction of the message transmitted on the first non-access stratum connection is uplink; and
the count value of the message transmitted on the first non-access stratum connection is equal to a quantity of times that the first mobility management network element receives, on the first non-access stratum connection based on the first security protection key, an uplink message from the terminal device.

11. A communication method, comprising:
sending a registration request to a second mobility management network element, wherein the registration request comprises indication information, the indication information indicates dual 3GPP access, and a first non-access stratum connection that is based on a 3GPP access type exists between a terminal device and a first mobility management network element; and
generating a second mobility management network element key based on a first mobility management network element key, wherein the first mobility management network element key is used to derive a first security protection key, the first security protection key is used to perform security protection on a message transmitted on the first non-access stratum connection, the second mobility management network element key is used to derive a second security protection key, the second security protection key is used to perform security protection on a message transmitted on a second non-access stratum connection, and the second non-access stratum connection is a connection that is between the terminal device and the second mobility management network element and that is based on the 3GPP access type.

12. The method according to claim 11, wherein
sending the registration request to the second mobility management network element comprises:
generating, based on the first security protection key and the registration request, a message authentication code used to verify the registration request; and
sending the registration request and the message authentication code to the second mobility management network element.

13. The method according to claim 11 or 12, further comprising:
receiving a second key set identifier from the second mobility management network element; or
receiving a first key set identifier and a second key set identifier from the second mobility management network element, wherein
the first key set identifier identifies a first security context of the first non-access stratum connection, and the first security context comprises the first mobility management network element key and the first security protection key; and
the second key set identifier identifies a second security context of the second non-access stratum connection, and the second security context comprises the second mobility management network element key and the second security protection key.

14. The method according to claim 13, wherein the second key set identifier is carried in a non-access stratum security mode command, or the first key set identifier and the second key set identifier are carried in a non-access stratum security mode command.

15. The method according to any one of claims 11 to 14, further comprising:
initializing a count value of the message transmitted on the second non-access stratum connection.

16. The method according to any one of claims 11 to 15, wherein generating the second mobility management network element key based on the first mobility management network element key comprises:
generating the second mobility management network element key based on the first mobility management network element key and first information, wherein the first information comprises one or more of the following:
an identifier of a key generation function;
a count value of the message transmitted on the first non-access stratum connection;
a direction of the message transmitted on the first non-access stratum connection;
an identifier of the 3GPP access type;
an identifier of a public land mobile network to which the first mobility management network element belongs; and
an identifier of a public land mobile network to which the second mobility management network element belongs.

17. The method according to claim 16, wherein
the direction of the message transmitted on the first non-access stratum connection is downlink; and
the count value of the message transmitted on the first non-access stratum connection is equal to a quantity of times that the terminal device receives, on the first non-access stratum connection based on the first security protection key, a downlink message from the first mobility management network element.

18. The method according to claim 16, wherein
the direction of the message transmitted on the first non-access stratum connection is uplink; and
the count value of the message transmitted on the first non-access stratum connection is equal to a quantity of times that the terminal device sends, on the first non-access stratum connection based on the first security protection key, an uplink message to the first mobility management network element.

19. A communication method, comprising:
receiving, by a second mobility management network element, a registration request from a terminal device, wherein the registration request comprises indication information, and the indication information indicates dual 3GPP access;
sending, by the second mobility management network element, a first message to a first mobility management network element, wherein the first message comprises the registration request, and a first non-access stratum connection that is based on a 3GPP access type exists between the terminal device and the first mobility management network element;
receiving, by the second mobility management network element, a second message from the first mobility management network element, wherein the second message comprises a second mobility management network element key; and
generating, by the second mobility management network element, a second security protection key based on the second mobility management network element key, wherein the second security protection key is used to perform security protection on a message transmitted on a second non-access stratum connection, and the second non-access stratum connection is a connection that is between the terminal device and the second mobility management network element and that is based on the 3GPP access type.

20. The method according to claim 19, wherein the second mobility management network element key is generated based on a first mobility management network element key, the first mobility management network element key is used to derive a first security protection key, and the first security protection key is used to perform security protection on a message transmitted on the first non-access stratum connection.

21. The method according to claim 19 or 20, wherein the first message further comprises a message authentication code, the message authentication code is used to verify the registration request, and the method further comprises:
receiving, by the second mobility management network element, the message authentication code from the terminal device.

22. The method according to any one of claims 19 to 21, wherein the second message further comprises a second key set identifier, the second key set identifier identifies a second security context of the second non-access stratum connection, the second security context comprises the second mobility management network element key and the second security protection key, and the second key set identifier is generated based on a first key set identifier; and
the first key set identifier identifies a first security context of the first non-access stratum connection, and the first security context comprises the first mobility management network element key and the first security protection key; and
the method further comprises:
sending, by the second mobility management network element, the second key set identifier to the terminal device.

23. The method according to claim 22, wherein the second message further comprises the first key set identifier; and
the method further comprises:
sending, by the second mobility management network element, the first key set identifier to the terminal device.

24. The method according to any one of claims 19 to 21, wherein the second message further comprises a first key set identifier, the first key set identifier identifies a first security context of the first non-access stratum connection, and the first security context comprises the first mobility management network element key and the first security protection key; and
the method further comprises:
generating, by the second mobility management network element, a second key set identifier based on the first key set identifier, wherein the second key set identifier identifies a second security context of the second non-access stratum connection, and the second security context comprises the second mobility management network element key and the second security protection key; and
sending, by the second mobility management network element, the second key set identifier to the terminal device, or sending a first key set identifier and the second key set identifier to the terminal device.

25. The method according to any one of claims 22 to 24, wherein
a value of a type field comprised in the second key set identifier is the same as a value of a type field comprised in the first key set identifier; and
a value of a value field comprised in the second key set identifier is different from a value of a value field comprised in the first key set identifier.

26. The method according to any one of claims 22 to 25, wherein the second key set identifier is carried in a non-access stratum security mode command, or the first key set identifier and the second key set identifier are carried in a non-access stratum security mode command.

27. The method according to any one of claims 19 to 26, wherein the first message is a context transmission request, and the second message is a context transmission request response; or the first message is an N 1 message notification, and the second message is a context creation response; or the first message is a dual 3GPP access security context transmission request, and the second message is a dual 3GPP access security context transmission response.

28. The method according to any one of claims 19 to 27, wherein
initializing, by the second mobility management network element, a count value of the message transmitted on the second non-access stratum connection.

29. A communication apparatus, comprising a module configured to perform the method according to any one of claims 1 to 10, a module configured to perform the method according to any one of claims 11 to 18, or a module configured to perform the method according to any one of claims 19 to 28.

30. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus; and the processor is configured to implement the method according to any one of claims 1 to 10, the method according to any one of claims 11 to 18, or the method according to any one of claims 19 to 28 by using a logic circuit or executing code instructions.

31. A computer-readable storage medium, wherein the storage medium stores a computer program or instructions, and when the computer program or the instructions are executed by a communication apparatus, the method according to any one of claims 1 to 10, the method according to any one of claims 11 to 18, or the method according to any one of claims 19 to 28 is implemented.

32. A computer program product, wherein the computer program product comprises a computer program or instructions, and when the computer program or the instructions are executed by a communication apparatus, the method according to any one of claims 1 to 10, the method according to any one of claims 11 to 18, or the method according to any one of claims 19 to 28 is implemented.

33. A communication method, comprising:
receiving, by a second mobility management network element, a registration request from a terminal device, and sending a first message to a first mobility management network element, wherein the first message comprises the registration request, the registration request comprises indication information, the indication information indicates dual 3GPP access, and a first non-access stratum connection that is based on a 3GPP access type exists between the terminal device and the first mobility management network element;
generating, by the first mobility management network element, a second mobility management network element key based on a first mobility management network element key, and sending a second message to the second mobility management network element, wherein the first mobility management network element key is used to derive a first security protection key, and the first security protection key is used to perform security protection on a message transmitted on the first non-access stratum connection; and
generating, by the second mobility management network element, a second security protection key based on the second mobility management network element key comprised in the second message, wherein the second security protection key is used to perform security protection on a message transmitted on a second non-access stratum connection, and the second non-access stratum connection is a connection that is between the terminal device and the second mobility management network element and that is based on the 3GPP access type.

34. The method according to claim 33, wherein before receiving, by the second mobility management network element, the registration request from the terminal device, the method further comprises: sending, by the terminal device, the registration request to the second mobility management network element; and
after generating, by the second mobility management network element, the second security protection key based on the second mobility management network element key comprised in the second message, the method further comprises: generating, by the terminal device, the second mobility management network element key based on the first mobility management network element key.

35. A communication system, comprising:
a first mobility management network element and a second mobility management network element, wherein
the first mobility management network element is configured to implement the method according to any one of claims 1 to 10; and
the second mobility management network element is configured to implement the method according to any one of claims 19 to 28.

36. The system according to claim 35, further comprising:
a terminal device, wherein the terminal device is configured to implement the method according to any one of claims 11 to 18.

37. A chip, wherein the chip is configured to read and execute a computer program or instructions in a memory, to implement the method according to any one of claims 1 to 10, the method according to any one of claims 11 to 18, or the method according to any one of claims 19 to 28.
